(19) Europäisches Patentamt
European Patent Office
Office européen des brevets

(11) **EP 3 913 448 B1**

(12) **EUROPÄISCHE PATENTSCHRIFT**

(45) Veröffentlichungstag und Bekanntmachung des Hinweises auf die Patenterteilung:
**06.07.2022 Patentblatt 2022/27**

(21) Anmeldenummer: **20175402.5**

(22) Anmeldetag: **19.05.2020**

(51) Internationale Patentklassifikation (IPC):
**G05B 19/418** (2006.01)     **G01B 21/04** (2006.01)

(52) Gemeinsame Patentklassifikation (CPC):
**G01B 21/04; G05B 19/41875;** G05B 2219/32075;
G05B 2219/37193; G05B 2219/37443; Y02P 90/02

(54) **VERFAHREN UND ANORDNUNG ZUR VERMESSUNG VON WERKSTÜCKEN GLEICHEN TYPS**

METHOD AND ASSEMBLY FOR MEASURING WORKPIECES OF THE SAME TYPE

PROCÉDÉ ET AGENCEMENT DE MESURE DE PIÈCES DU MÊME TYPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.11.2021 Patentblatt 2021/47**

(73) Patentinhaber: **Carl Zeiss Industrielle Messtechnik GmbH 73447 Oberkochen (DE)**

(72) Erfinder:
• **Rüger, Oliver 01217 Dresden (DE)**
• **Emir, Özgür 73432 Aalen (DE)**

(74) Vertreter: **Patentanwälte Bressel und Partner mbB Potsdamer Platz 10 10785 Berlin (DE)**

(56) Entgegenhaltungen:
**EP-A1- 3 708 945     US-A1- 2011 054 835 US-A1- 2018 307 198**

**Beschreibung**

Die Erfindung betrifft ein Verfahren zur Vermessung von Werkstücken, wobei die Werkstücke gleichen Typs sind. Für eine Vielzahl der Werkstücke des gleichen Typs wird entsprechend einer Messvorschrift jeweils an gleicher vorgegebener Position ein Oberflächenpunkt des Werkstücks als ein durch die Messvorschrift ausgezeichneter Messpunkt vermessen und wird als Ergebnis für jedes vermessene Werkstück ein Messwert erhalten.

Die Erfindung betrifft außerdem eine Anordnung mit zumindest einem Koordinatenmessgerät und einer Auswertungseinrichtung zur Auswertung von Messwerten, die von dem zumindest einen Koordinatenmessgerät erzeugt werden, wobei die Auswertungseinrichtung ausgestaltet ist, Messwerte aus einer Vermessung von Werkstücken auszuwerten, die gleichen Typs sind. Die Anordnung dient insbesondere der Durchführung des Verfahrens gemäß einer der Ausgestaltungen des Verfahrens. Das zumindest eine Koordinatenmessgerät ist ausgestaltet, für eine Vielzahl der Werkstücke des gleichen Typs entsprechend einer Messvorschrift jeweils an gleicher vorgegebener Position einen Oberflächenpunkt des Werkstücks als einen durch die Messvorschrift ausgezeichneten Messpunkt zu vermessen und als Ergebnis für jedes vermessene Werkstück einen Messwert zu erzeugen.

Jeder der Messwerte kann insbesondere zumindest einen Koordinatenwert aufweisen, der auf ein Koordinatensystem bezogen ist. Bei dem Koordinatensystem kann es sich zum Beispiel um ein Koordinatensystem des Werkstücks (insbesondere bezogen auf Solldaten des Werkstücks, wie zum Beispiel CAD Daten, oder bezogen auf das konkrete vermessene Werkstück) oder um ein Koordinatensystem des Koordinatenmessgeräts handeln. Zum Beispiel bei einem kartesischen Koordinatensystem und dreidimensionaler Vermessung des Oberflächenpunkts weist jeder Messwert drei Koordinatenwerte auf. Es ist jedoch auch möglich, eine andere Anzahl von Koordinaten werden pro Messwert aufzunehmen, zum Beispiel lediglich zwei oder einen Koordinatenwert pro Messwert.

Bei den Werkstücken handelt es sich um typgleiche Werkstücke. Dies bedeutet jedoch nicht zwingend, dass alle Bereiche der Werkstücke typgleich sind. Vielmehr kann zum Beispiel lediglich ein Teilbereich der Werkstücke typgleich sein. In diesem Fall wird das Verfahren für zumindest einen Oberflächenpunkt in einem Teilbereich der Werkstücke durchgeführt, in dem die Werkstücke typgleich sind. Typgleich kann insbesondere bedeuten, dass bei allen Werkstücken jedenfalls dieser Teilbereich auf gleiche Weise hergestellt wurde und daher insbesondere die gleiche Soll-Form hat. Die typgleichen Werkstücke müssen aber nicht zwangsläufig die gleiche Soll-Form haben. Z.B. kann an zunächst vollständig verschiedenartigen Werkstücken in Bezug auf ein gemeinsames Koordinatensystem (z.B. das Koordinatensystem einer Produktionsanlage) eine Bearbeitung stattfinden. So kann z.B. an verschiedenen Stellen der verschiedenen Werkstücke eine gleichartige Bohrung eingebracht werden, eine gleichartige Verformung vorgenommen werden oder ein gleichgroßer Materialbereich aufgebracht werden. Die Messpunkte der verschiedenen Werkstücke an den Bearbeitungspositionen stehen somit dennoch aus geometrischen Gründen miteinander in Beziehung (d.h. entsprechen sich geometrisch) und ihre Messwerte können miteinander korreliert sein.

Bezüglich der Produktion oder sonstigen Bearbeitung von Werkstücken ist es bekannt, die Qualität der hergestellten/bearbeiteten Werkstücke zu überprüfen. Dabei kann an vordefinierten Stellen der Werkstücke, z. B. in einem Koordinatensystem des Werkstücks oder des Messgeräts, eine Messung von Koordinaten stattfinden. In diesem Beschreibungstext werden die vordefinierten Stellen unter den Begriff "Messpunkt" subsummiert. Häufig werden Messpunkte anhand einer Soll-Form vorgegeben und somit z.B. in einem Koordinatensystem der Soll-Form definiert. Die Soll-Form kann insbesondere durch ein CAD (Computer Aided Design)- Modell definiert sein. Messpunkte können z.B. aber auch jeweils anhand des konkret zu vermessenden Werkstücks definiert werden. Wenn das Werkstück eine charakteristische Form hat, kann relativ dazu der jeweilige Messpunkt definiert sein. Beispiele dafür sind Messpunkte am Boden einer Bohrung oder die Endpunkte eines erhabenen Bereichs oder Vorsprungs.

An dem Messpunkt kann zumindest eine Koordinate gemessen werden, d.h. ihr Wert ermittelt werden. Wenn Informationen über eine Soll-Form vorhanden sind, kann die gemessene Koordinate mit der entsprechenden Koordinate der Soll-Form verglichen werden und z.B. die Differenz und/oder Abweichung der Koordinaten oder, im zweidimensionalen oder dreidimensionalen Fall, alternativ oder zusätzlich die Differenz und/oder Abweichung zum entsprechenden Punkt der Soll-Form ermittelt werden.

Häufig werden mehrere Werkstücke desselben Typs oder mit vergleichbaren Formmerkmalen vermessen. Wenn die Werkstücke nacheinander oder zumindest teilweise zu unterschiedlichen Zeitpunkten hergestellt oder bearbeitet wurden, dann kann in Bezug auf die entsprechenden Messdaten von einer Historie der Messdaten gesprochen werden. Im allgemeinen Fall der Vermessung einer Mehrzahl von Werkstücken wird für jedes der Werkstücke insbesondere ein Satz von Messdaten erhalten und ist somit dem jeweiligen Werkstück zugeordnet, wobei der Satz von Messdaten einer Mehrzahl von Messpunkten des Werkstücks entspricht. Anders ausgedrückt enthält jeder Satz von Messdaten Messinformationen zu den verschiedenen gemessenen Messpunkten des Werkstücks. Die Sätze von Messdaten können jeweils so strukturiert und/oder geordnet sein, dass Messinnformationen in den verschiedenen Sätzen, die zu einander entsprechenden Messpunkten gehören, identifizierbar und somit auch miteinander vergleichbar sind. Der Satz von Messdaten eines jeden Werkstücks weist somit zu jedem Messpunkt der Werkstücke zumindest eine gemessene Koordinate und/oder für jede gemessene Koordinate eine Abweichung zu einer Vergleichskoordinate auf.

Die aus einer Vorab-Vermessung von Werkstücken erhaltene Korrelation der Messwerte verschiedener Messpunkte bietet die Möglichkeit, die Anzahl der Messpunkte bei einer Qualitätskontrolle von einer Vielzahl von typgleichen Werkstücken zu reduzieren und somit den Messaufwand zu begrenzen.

US 2018/0307198 A1 beschreibt eine Auswertungseinrichtung zur Auswertung einer Qualität einer maschinell gefertigten Oberfläche bezüglich eines Grades einer Ebenheit einer Formänderung in einem Werkstück. Als Ergebnisse einer Untersuchung durch ein Lasermikroskop werden in dem Dokument eine Oberflächen-Rauigkeit, eine maximale Oberflächenhöhe, ein Oberflächentextur-Ansichtsverhältnis, eine Kurtosis, eine Schiefe und ein entwickeltes Flächenverhältnis zwischen zwei Flächen erwähnt.

US 2011/054835 A1 bezieht sich auf ein Verfahren zum Bewerten der Genauigkeit von Ausgabedaten basierend auf einer Fehlerausbreitung.

Die prioritätsältere, jedoch nachveröffentlichte EP 3 708 945 beschreibt die Auswertung von Messdaten aus einer Vermessung einer Mehrzahl von Werkstücken.

Es ist eine Aufgabe der vorliegenden Erfindung, die Qualitätskontrolle bei der Herstellung und/oder Bearbeitung einer Mehrzahl von Werkstücken gleichen Typs zu verbessern.

Die Erfindung betrifft die Vermessung von typgleichen Werkstücken durch zumindest ein Koordinatenmessgerät. Dies bedeutet, dass die typgleichen Werkstücke alle von demselben Koordinatenmessgerät vermessen werden können oder von verschiedenen Koordinatenmessgeräten vermessen werden können. Zum Beispiel können einige der typgleichen Werkstücke aus einer Serienfertigung von einem ersten Koordinatenmessgerät vermessen werden und einige andere der Werkstücke aus der Serienfertigung von einem zweiten Koordinatenmessgerät vermessen werden. Optional können mehr als zwei Koordinatenmessgeräte verwendet werden.

Insbesondere kann bei einer Qualitätskontrolle der typgleichen Werkstücke zumindest ein Koordinatenmessgerät in Portalbauweise verwendet werden, an dem ein taktiler Sensor angeordnet ist, um jeweils ein Werkstück zu vermessen. Alternativ kann jedoch ein anderes Koordinatenmessgerät (zum Beispiel ein Koordinatenmessgerät mit einem beweglichen Gelenksarm, an dem der Sensor zur Vermessung des Werkstücks angeordnet ist) verwendet werden und/oder ein anderer Sensor (wie zum Beispiel ein optischer Sensor) handeln.

Besonders bevorzugt wird eine Vorab-Vermessung einer Vielzahl der typgleichen Werkstücke mittels eines optischen Sensors oder mehrerer optischer Sensoren und die Vorab-Auswertung der dadurch erhaltenen Messinformationen. Darauf wird noch näher eingegangen. Unter Verwendung des Ergebnisses der Vorab-Auswertung werden dann die typgleichen Werkstücke bei der besonders bevorzugten Vorgehensweise mittels eines taktilen Sensors oder mittels mehrerer taktilen Sensoren vermessen.

Die Erfindung ist jedoch nicht auf diese Art von Koordinatenmessgeräten und auch nicht auf diese Art von Sensoren beschränkt, auch wenn die Verwendung eines optischen Sensors zur Vorab-Vermessung der Werkstücke bevorzugt wird, da optische Sensoren dazu in der Lage sind, eine Vielzahl von Messpunkten in kurzer Zeit zu vermessen, bzw. die zur Bestimmung der Koordinaten der Messpunkte geeignete Messinformationen in kurzer Zeit zu erfassen. Bei der eigentlichen Qualitätskontrolle werden taktile Sensoren bevorzugt, da diese in vielen Fällen Messwerte mit höherer Genauigkeit liefern. In jedem Fall kann die Vermessung der Werkstücke zum Beispiel im Takt der Serienfertigung oder Serienbearbeitung von Werkstücken oder für eine Auswahl der in Serienfertigung oder Serienbearbeitung hergestellten Werkstücke durchgeführt werden. Diese Art der Vermessung wird auch als In-Line-Vermessung bezeichnet. Dabei muss nicht zwangsläufig jedes Exemplar der in der Serienfertigung hergestellten und/oder bearbeiteten Werkstücke vermessen werden.

Allgemeiner formuliert wird vorgeschlagen, aus einer vorab durchgeführten Vermessung von Werkstücken des gleichen Typs, bei der andere Exemplare der Werkstücke des gleichen Typs als später bei der Serienfertigung vermessen werden, jeweils zumindest einen ausgezeichneten Messpunkt und eine Vielzahl weiterer Oberflächenpunkte als weitere Messpunkte zu vermessen. Durch eine Auswertung der so erhaltenen Messwerte werden Information über eine bestehende Korrelation der Messwerte des ausgezeichneten Messpunkts zu den Messwerten der weiteren Messpunkte erhalten. Selbstverständlich werden in der Regel bei der Vorab-Vermessung viele Messpunkte vermessen, deren Messwerte nicht alle miteinander korreliert sind. Zum Beispiel können einige Messpunkte Messwerte aufweisen, die mit keinen Messwerten anderer Messpunkte korreliert sind. Ferner kommt es häufig vor, dass bei einer Vorab-Vermessung und anschließender Korrelationsanalyse mehrere Gruppen von Messpunkten identifiziert werden, wobei innerhalb jeder Gruppe die Messwerte der Messpunkte alle miteinander korreliert sind oder der Messwert eines der Messpunkte mit den Messwerten aller anderen Messpunkte korreliert ist, nicht aber die Messwerte der Messpunkte verschiedener Gruppen. Diese Gruppen können, wie unten noch näher beschrieben wird, als Cluster bezeichnet werden.

Insbesondere ist Korrelation von Messwerten eine geeignete Basis für die Festlegung desjenigen Messpunkts oder derjenigen Messpunkte, die später insbesondere zur Qualitätskontrolle bei der Fertigung und/oder Bearbeitung der Werkstücke vermessen werden. Anders ausgedrückt stellt diese Information eine gute Grundlage für die Erstellung der Messvorschrift dar.

Es wird insbesondere vorgeschlagen, nach der Vorab-Vermessung von Werkstücken gleichen Typs jeweils für zumindest zwei Messpunkte eine Korrelation der gemessenen Koordinate(n) und/oder der Abweichung zu einem Vergleichswert zu bestimmen, und zwar über alle betrachteten Werkstücke. Für jedes betrachtete Werkstück, wobei die Betrachtung nicht bildlich zu verstehen ist, ist ein Satz von Messdaten der eingangs genannten Art vorhanden oder wird ermittelt. In der Regel bezieht sich die Korrelation der Messwerte zweier Messpunkte auf die Tatsache, dass die Abweichung der Messwerte oder die Abweichung zumindest einer einzelnen Koordinate der Messwerte zu einem Vergleichswert korreliert ist. Es ist aber auch möglich, dass die Messwerte unmittelbar zueinander korreliert sind und es bei der Betrachtung der Korrelation keiner zusätzlichen Vergleichswerte bedarf. Dies ist zum Beispiel dann der Fall, wenn alle Messpunkte in einer Ebene liegen sollen und die Koordinate des Messpunkts oder eine Koordinate des Messpunkts in einer Richtung quer zu der Ebene gemessen wird. Wie unten noch näher ausgeführt wird, schließt der Begriff der "Korrelation" gegebenenfalls auch eine Anti-Korrelation mit ein bzw. bedeutet eine Anti-Korrelation, dass eine Korrelation besteht. Der Begriff der Korrelation kann daher auch als ein Oberbegriff verstanden werden, der die Möglichkeit einer Anti-Korrelation mit einschließt.

Aus den Sätzen von Messdaten kann jeweils für die zumindest zwei Messpunkte die zugehörige Messinformation derart verarbeitet werden, dass ein Maß der Korrelation erhalten wird. Das Maß der Korrelation enthält somit eine quantitative Aussage über den Grad des Zusammenhangs und/oder der Abhängigkeit der Messinformationen der zumindest zwei Messpunkte über alle betrachteten Werkstücke. Im Fall der Historie der Herstellung/Bearbeitung von Werkstücken wird somit eine Aussage über den Zusammenhang über den gesamten Zeitraum der Historie erhalten. Da die Bestimmung des Maßes der Korrelation jeweils in Bezug auf zumindest zwei Messpunkte vorzugsweise automatisch (z.B. unter Verwendung einer Datenverarbeitungs-Vorrichtung) durchgeführt wird, kann für eine Vielzahl von Kombinationen von Messpunkten jeweils ein Maß der Korrelation bestimmt werden. Somit ist eine automatisierte massenhafte Auswertung von Messpunkten möglich. Dies wiederum ermöglicht es, z.B. mittels eines optischen Vermessungssensors (wie z.B. einer Kamera oder eines Scanners) die Werkstücke jeweils bezüglich einer großen Anzahl von Messpunkten zu vermessen und dann die so entstandenen Messdatensätze auszuwerten. Die durch die Bestimmung des Maßes der Korrelation erreichte Quantifizierung bei der Auswertung ermöglicht zudem eine genauere Auswertung und/oder zuverlässigere Feststellung von Qualitätsmängeln.

In Oberflächenbereichen, in denen die Messwerte der Oberflächenpunkte hoch miteinander korreliert sind, reicht es zu Zwecken der Qualitätskontrolle aus, einen Messpunkt oder eine verhältnismäßig geringe Anzahl von Messpunkten zu vermessen, wenn davon ausgegangen werden kann, dass die Korrelation weiter besteht. Dies ist jedoch nicht zwangsläufig der Fall. Vielmehr muss mit einer Änderung von Umständen gegenüber den Umständen der Vorab-Vermessung der Werkstücke des gleichen Typs gerechnet werden. Die Art der Umstände ist vielfältig. Zum Beispiel kann sich die Fertigung oder Bearbeitung der Werkstücke ändern, etwa bereits dann, wenn ein anderes Bearbeitungswerkzeug als zuvor verwendet wird oder eine andere Bearbeitungs- oder Fertigungsmaschine. Ein Verschleiß von Werkzeugen und Maschinen kann sich an jeder Stelle einer Produktionskette und auch der Vermessung auf die Korrelation auswirken. Dies bedeutet, dass auch Defekte der Vermessungseinrichtung und/oder die Eigenschaften des Messsensors zu einer Veränderung der Korrelation führen können. Auch können die äußeren Umstände wie zum Beispiel Umgebungstemperatur sich verändern. Ferner kann das an der Bearbeitung oder Fertigung der Werkstücke beteiligte Personal einen Einfluss haben, sodass sich die Umstände bei einem Wechsel des Personals ändern. Ein weiterer Umstand betrifft das bei einer Fertigung verwendete Grundmaterial. Zum Beispiel kann das Grundmaterial bei einer neuen Charge veränderte Eigenschaften gegenüber einer früheren Charge aufweisen.

Insbesondere kann daher zum Beispiel mit einem optischen Sensor oder einer Mehrzahl von optischen Sensoren vorab eine Mehrzahl der typgleichen Werkstücke vermessen werden und kann die Korrelation der Messwerte von einer Vielzahl von Messpunkten bestimmt werden. In der Regel sind nicht alle Messwerte von Messpunkten miteinander korreliert, sondern lediglich die Messwerte von Messpunkten in bestimmten Oberflächenbereichen, wobei es sich bei diesen Bereichen nicht um durchgehende Oberflächenbereiche handeln muss. Vielmehr kann sich zwischen Teilen eines ersten Oberflächenbereichs mit korrelierten Messwerten ein anderer, zweiter Oberflächenbereich befinden, in dem die Messwerte der Messpunkte zwar miteinander korreliert sein können, nicht jedoch mit den Messwerten der Messpunkte des ersten Oberflächenbereichs.

Dann kann zum Beispiel wie oben erwähnt eine Messvorschrift, insbesondere ein sogenannter Prüfplan zur Vermessung weitere Werkstücke erstellt oder abgeändert werden.

Theoretisch kann eine Korrelation bereits in Bezug auf die Messwerte von lediglich zwei Exemplaren der typgleichen Werkstücke bestimmt werden. In der Praxis ist es jedoch von Vorteil, die Korrelation auf Basis einer größeren Anzahl von Werkstücken zu bestimmen, z. B. fünfzig oder einhundert Exemplare. Durch die Korrelation, die sich jeweils auf ein Paar von Messpunkten bezieht, wird eine Aussage in Bezug auf das jeweilige Paar von Messpunkten aller einbezogener Werkstücke getroffen. Insbesondere kann für jedes der einbezogenen Werkstücke ein Satz von Messdaten erzeugt werden, der durch die Messwerte der vermessenden Messpunkte gebildet wird. Weichen z.B. die gemessenen Koordinaten an den Messpunkten des Paars von Messpunkten in jedem Satz von Messdaten in gleicher Weise von einem gemeinsamen Vergleichswert ab oder sind die gemessenen Koordinaten in jedem Satz von Messdaten gleich, ist die Korrelation maximal (z.B. 1). Variieren dagegen die Abweichungen oder die gemessenen Koordinaten des Paars von Messpunkten in den Sätzen von Messdaten, ist die Korrelation entsprechend kleiner. Die Abweichungen oder gemessenen Koordinaten können auch anti-korreliert sein. Dies wäre z.B. dann der Fall, wenn eine Zunahme der Abweichung zu einer Vergleichskoordinate für den einen Messpunkt des Paars mit einer Abnahme der Abweichung zu einer Vergleichskoordinate für den anderen Messpunkt des Paars korreliert. Wenn daher in dieser Beschreibung davon die Rede ist, dass eine Korrelation der Messwerte zweier oder mehrerer Messpunkte zu erwarten ist, dann schließt dies auch den Fall mit ein, dass eine Anti-Korrelation erwartet wird. Die Vergleichskoordinaten oder allgemeiner formuliert Vergleichswerte können zum Beispiel aus CAD-Daten für die Herstellung der typgleichen Werkstücke stammen, oder allgemeiner formuliert aus Solldaten.

Allgemeiner formuliert kann die Korrelation (wie oben erwähnt) insbesondere durch ein Maß der Korrelation angegeben werden. Insbesondere kann das Maß der Korrelation einen Korrelationskoeffizienten aufweisen. Bei dem Maß der Korrelation kann es sich um ein Maß für den Grad des linearen Zusammenhangs zwischen den Messinformationen der einander entsprechenden Messpunkte in der Mehrzahl der Sätze von Messdaten handeln. Z.B. kann es sich um einen Pearson-Korrelationskoeffizienten handeln. Ein Maß für die Korrelation kann jedoch alternativ oder zusätzlich als Maß einer nicht linearen Korrelation bestimmt werden. Beispielsweise kann ein Rangkorrelationskoeffizient bestimmt werden, z.B. nach Spearman oder nach Kendall. Insbesondere können als Maß für die Korrelation daher Zahlenwerte, z.B. nach Pearson im Bereich von -1 bis +1, oder Werte des Rangkorrelationskoeffizienten angegeben werden. Andere Arten der Bestimmung des Maßes der Korrelation sind nicht ausgeschlossen.

Insbesondere kann das Maß der Korrelation jeweils für eine Mehrzahl von Paaren von Messpunkten bestimmt werden und können Messpunkte, die Teil eines Paars von Messpunkten sind, dessen Maß der Korrelation eine vorgegebene Bedingung erfüllt, einander zugeordnet werden. Insbesondere können die einander zugeordneten Messpunkte auf zumindest eines der Werkstücke oder auf eine Soll-Form der Werkstücke bezogen sein.

Somit wird anhand des Maßes der Korrelation eine Zuordnung einer Mehrzahl von Messpunkten zueinander hergestellt. Die vorgegebene Bedingung kann insbesondere sein, dass das Maß der Korrelation in einem vorgegebenen oder anhand einer Vorgabe eindeutig ermittelbaren Wertebereich liegt. Auf diese Weise können die Messpunkte von Paaren von Messpunkten einander zugeordnet werden, die in gleicher oder ähnlicher Weise miteinander korreliert sind. Dies ermöglicht es zum Beispiel, hoch miteinander korrelierte oder antikorrelierte Messpunkte zu identifizieren. Optional ist es zusätzlich möglich, in ungefähr gleicher Weise (d. h. zu ungefähr gleichem Grad) korrelierte Paare von Messpunkten zu identifizieren. In diesen Fällen kann aus den identifizierten Messpunkten eine Erkenntnis abgeleitet werden, unter deren Berücksichtigung ein Prozess der Bearbeitung und/oder Vermessung zusätzlicher Werkstücke verändert werden kann Z. B. kann aus hoch korrelierten Messpunkten geschlossen werden, dass ein systematischer Zusammenhang der Bearbeitung bezüglich der beiden Messpunkte vorliegt (zum Beispiel wenn die Abweichung von einer Soll-Koordinate groß ist). Beispielsweise kann bei großer Abweichung von der Soll-Koordinate aus einer Korrelation eines ersten Messpunkts am Rand einer Bohrung zu einem zweiten Messpunkt an einer Wölbung eines (entsprechend der Soll-Vorgabe) ebenen Oberflächenbereichs in einer Entfernung zur Bohrung geschlossen werden, dass die Bohrung zu einer Verformung im Bereich des zweiten Messpunkt führt. Es kann aber auch in manchen Fällen zum Beispiel erwartet werden, dass Abweichungen zwischen gemessenen Koordinaten und der Soll-Form in einem bestimmten örtlichen Bereich miteinander korrelieren. Wenn dies nicht der Fall ist, d. h. wenn Paare von Messpunkten in diesem örtlichen Bereich nicht oder geringfügig miteinander korrelieren, kann dies ein Hinweis auf unerwartete Fehler bei der Bearbeitung der Werkstücke sein. Wenn zum Beispiel Messpunkte im Bereich einer Bohrung nicht wie erwartet miteinander korreliert sind, kann dies z. B. auf einen Mangel des verwendeten Bohrers hinweisen. Ausgelöst durch den genannten Hinweis auf Fehler kann dann das verwendete Bearbeitungswerkzeug und/oder Bearbeitungsverfahren genauer untersucht werden.

Insbesondere können Messpunkte als Ergebnis der Vorab-Vermessung und der Korrelationsanalyse einander zugeordnet werden, indem ein Cluster von Messpunkten gebildet wird, wobei zunächst ein erster Messpunkt für das Cluster ausgewählt oder ermittelt wird und dann weitere Messpunkte dem Clusters zugeordnet werden, indem geprüft wird, ob jeweils das Maß der Korrelation eines Paares von Messpunkten, das aus dem potentiellen weiteren Messpunkt und dem ersten Messpunkt besteht, einer Aufnahmebedingung zur Aufnahme des potentiellen weiteren Messpunktes in das Cluster genügt. Bei dem ersten Messpunkt kann auch von einem "Zentrum" des Clusters gesprochen werden, wobei die Lage des Zentrums im Allgemeinen nicht mit dem Schwerpunkt bzw. Massenzentrum aller Punkte des Clusters zusammenfällt. Vorzugsweise kann ein solches Zentrum ermittelt werden, indem für jeden Messpunkt oder zumindest für eine Mehrzahl von Messpunkten geprüft wird, wie viele andere Messpunkte die Aufnahmebedingung erfüllen. Als Zentrum kann dann insbesondere der Messpunkt ausgewählt werden, zu dem die meisten anderen Messpunkte die Aufnahmebedingung erfüllen. Es können auch mehrere Zentren ausgewählt werden und auf diese Weise mehrere Cluster von Messpunkten gebildet werden. Zum Beispiel können die mehreren Zentren die Messpunkte sein, zu denen jeweils die meisten anderen Messpunkte die Aufnahmebedingung erfüllen. Vorzugsweise werden nach Bildung eines ersten Clusters alle Punkte des Clusters nicht mehr für die Bildung weiterer Cluster betrachtet. Alternativ kann lediglich das Zentrum des bereits gebildeten Clusters für die Bildung weiterer Cluster nicht mehr betrachtet werden. Dies ermöglicht es insbesondere, dass Mitglieder des bereits gebildeten Clusters selbst wieder ein Zentrum eines weiteren Clusters werden können. Zum Beispiel kann eine möglichst kleine Anzahl von ClusterZentren ausgewählt werden, die bei vorgegebener Aufnahmebedingung zu einer insgesamt möglichst großen Anzahl von Messpunkten in den Clustern führen.

Die Aufnahmebedingung kann zum Beispiel darin bestehen, dass das Maß der Korrelation mindestens gleich oder (in einem anderen Fall) höchstens gleich einem vorgegebenen Schwellwert ist. Je kleiner der Schwellwert ist, desto größer werden die Oberflächenbereiche, in denen die Messpunkte der Cluster liegen, und umgekehrt. Im Allgemeinen ist es wünschenswert, den Schwellwert hoch zu wählen, damit die paarweise Korrelation aller Messpunkte des Clusters hoch ist.

Alle Messpunkte eines Clusters, die nicht das Zentrum sind, sind in ähnlicher Weise mit dem Zentrum des Clusters korreliert. Daraus lassen sich je nach örtlicher Verteilung der Messpunkte des Clusters, je nach den Abständen der Messpunkte zueinander und je nach Art und Wertebereich der Maße der Korrelation Schlussfolgerungen ziehen.

Allgemein kann die Aufgabe bei der Bildung der Cluster wie folgt definiert werden: Finde eine möglichst kleine Anzahl von Clusterzentren, die eine möglichst große Anzahl von Messpunkten in Cluster zerlegen.

Einem Cluster entspricht insbesondere ein Oberflächenbereich des oder der Werkstücke gleichen Typs, in dem die Messpunkte des Clusters liegen. Wie oben bereits erwähnt muss es sich bei dem Oberflächenbereich nicht zwangsläufig um einen durchgehenden, ununterbrochenen Oberflächenbereich handeln.

Nicht nur nach Bildung zumindest einer Zuordnung von Messpunkten, wie oben beschrieben, zum Beispiel der Bildung eines oder mehrerer Cluster, kann unter Berücksichtigung der bestimmten Maße der Korrelation ein Prüfplan erstellt oder verändert werden. Bei dem Prüfplan handelt es sich um einen Plan, der zu vermessende Messpunkte für die Vermessung zusätzlicher Werkstücke aufweist. Optional können bei der Erstellung oder Veränderung des Prüfplans weitere Informationen berücksichtigt werden, insbesondere der Abstand der Messpunkte des jeweiligen Paars von Messpunkten. Sind zum Beispiel Messpunkte eines Paars miteinander hoch korreliert und genügen einem vorgegebenen Kriterium bezüglich des Abstandes, insbesondere überschreiten einen vorgegebenen Schwellwert des Abstandes nicht, dann kann einer der Messpunkte des Paars aus dem Prüfplan ausgeschlossen werden oder nicht in den Prüfplan aufgenommen werden. Insbesondere wenn ein Cluster von Messpunkten gebildet ist, kann das Zentrum des Clusters in dem Prüfplan beibehalten werden oder in den Prüfplan aufgenommen werden, können jedoch andere Messpunkte des Clusters ausgeschlossen oder nicht aufgenommen werden.

Insbesondere kann der Abstand der Messpunkte in einem Koordinatensystem definiert sein, in dem die Soll-Form der Werkstücke angegeben ist. Es kommt somit nicht auf den tatsächlichen Abstand der Messpunkte eines hergestellten Werkstücks an, sondern auf den Abstand bezüglich der Soll-Form. Das entsprechende Modell der Soll-Form kann auch als Nominalmodell bezeichnet werden. Alternativ oder zusätzlich kann es sich bei dem Abstand zum Beispiel um den direkten Abstand im dreidimensionalen Raum handeln oder um den Abstand entlang der Oberfläche des Werkstücks oder der Soll-Form. Im zuletzt genannten Fall haben daher auf gegenüberliegenden Seiten eines Werkstücks gelegene Messpunkte einen größeren Abstand als im Fall des direkten Abstandes im dreidimensionalen Raum.

Insbesondere anhand eines gebildeten Clusters oder mehrerer gebildeter Cluster kann ein Defekt einer Mehrzahl von Werkstücken mit gleicher Soll-Form festgestellt werden, z. B. wenn bei der Fertigung der Werkstücke systematisch eine Abweichung von der Soll-Form erzeugt wird. In diesem Fall sind alle Messpunkte in dem von der Soll-Form abweichenden Bereich miteinander hoch korreliert. Insbesondere wenn die Messdaten zu jedem Messpunkt eine Abweichung zu einer Vergleichskoordinate aufweisen, können die hoch korrelierten Abweichungen der Paare von Messpunkten, die zudem insbesondere ein Cluster bilden, auf einfache Weise wahrgenommen werden. Die Auswertung der ermittelten Maße der Korrelation ermöglicht es daher Aussagen über einen Bearbeitungsprozess zu treffen und ermöglicht es optional auch den Bearbeitungsprozess abzuändern.

Alternativ oder zusätzlich können die bestimmten Maße der Korrelation auf andere Weise genutzt werden, um die Vermessung weiterer Werkstücke vorzubereiten. Diese Vermessung weiterer Werkstücke kann dann mit einem anderen Messsensor oder anderen Messsensoren durchgeführt werden als zuvor. Zum Beispiel kann gegenüber der vorher durchgeführten Vermessung der Mehrzahl von Werkstücken zur Bestimmung der Korrelation nach der Auswertung der Korrelation bei einer reduzierten Anzahl von Messpunkten ein taktiler Sensor verwendet werden. Insbesondere kann daher bei der Vermessung der Werkstücke zur Bestimmung der Korrelation zumindest ein erster Messsensor mit einer ersten Messgenauigkeit verwendet werden und nach der Bestimmung der Korrelation und der Berücksichtigung der Korrelation für die weitere Vermessung ein zweiter Sensor verwendet werden mit einer zweiten Messgenauigkeit. Die zweite Messgenauigkeit kann größer sein als die erste Messgenauigkeit. Im Ergebnis führt diese Ausgestaltung daher dazu, dass unter Berücksichtigung der bestimmten Maße der Korrelation eine reduzierte Anzahl von Messpunkten erhalten wird und diese dann mit größerer Genauigkeit gemessen werden können.

Oben wurde bereits erwähnt, dass die aus der Vorab-Vermessung erhaltenen Korrelationen nur so lange gültig sind, bis sich die Umstände, die zu den Korrelationen führen, ändern. Wenn nach der Vorab-Vermessung und Durchführung der Korrelationsanalyse aus jedem Cluster von Messpunkten lediglich ein Messpunkt der vermessenden Werkstücke vermessen wird, um eine Qualitätskontrolle durchzuführen, können Änderungen der Korrelationen nicht bemerkt werden. Die Korrelationsanalyse sollte daher von Zeit zu Zeit auf Basis von neuen Messdaten wiederholt und/oder überprüft werden. Die vollständige Wiederholung des Vorgehens bei der Vorab-Vermessung und der folgenden Korrelationsanalyse ist aber zeitaufwendig und es wird unter Umständen ein anderer Sensor zur Vermessung der Werkstücke benötigt.

Es wird daher vorgeschlagen, bei der Vermessung der Vielzahl der Werkstücke des gleichen Typs entsprechend der Messvorschrift nicht lediglich einen der Messpunkte zu vermessen, deren Messwerte miteinander korreliert sind, sondern zumindest einen zusätzlichen Messpunkt zu vermessen. Insbesondere wenn der zumindest eine zusätzliche Messpunkt bei einer Vielzahl von Werkstücken vermessen wird, kann die Korrelation der Messwerte zumindest eines Paars von Messpunkten überprüft werden. Wenn die Überprüfung nicht erfolgreich ist, d. h. sich Hinweise darauf ergeben, dass die Korrelation nicht mehr besteht oder nicht mehr in einem ausreichenden Ausmaß besteht, dann kann eine vollständige Wiederholung der Vorab-Vermessung und der Korrelationsanalyse veranlasst werden und optional dann auch durchgeführt werden.

Die Vermessung des zumindest einen zusätzlichen Messpunkts hat daher den Vorteil, dass bei geringem oder zumindest vertretbarem zusätzlichem Messaufwand das Bestehen der Korrelation und/oder der Grad der Korrelation überprüfbar ist, denn es werden nicht alle miteinander korrelierten Messpunkte bei jedem Werkstück vermessen. Die Korrelation, z. B. der Grad der Korrelation, wird überprüft, zum Beispiel indem das oben erwähnte Maß der Korrelation bestimmt wird. Wird bei der Überprüfung festgestellt, dass die Korrelationen nicht mehr besteht oder nicht mehr in ausreichendem Maß besteht, kann ein entsprechender Hinweis ausgegeben werden. Die Überprüfung erfolgt vorzugsweise automatisch auf Basis der Messwerte derjenigen Messpunkte, für die aufgrund der vorab ausgeführten Korrelationsanalyse eine Korrelation zu erwarten ist. Unter der Erwartung der Korrelation wird insbesondere der Fall verstanden, dass ein vorgegebener Grad der Korrelation erwartet wird. Auch hat die Überprüfung der Korrelation unter Nutzung von Exemplaren einer Serienfertigung der Werkstücke den Vorteil, dass die Serienfertigung nicht unterbrochen werden muss, um die Korrelation zu überprüfen. Bei der vorbekannten Vorgehensweise der Überprüfung der Korrelation war es erforderlich, eine große Anzahl von Werkstücken aus der Serienfertigung in der gleichen Weise zu vermessen wie bei der Vorab-Vermessung und erneut eine vollständige Korrelationsanalyse durchzuführen.

Die Vermessung des zumindest einen zusätzlichen Messpunkts hat auch den Vorteil, dass eine Veränderung der Korrelation aufgrund eines Defekts der Vermessungseinrichtung (zum Beispiel eines verwendeten Koordinatenmessgeräts) oder aufgrund einer Veränderung der Eigenschaften der Vermessungseinrichtung (wie Beispielsweise bei einem Sensorwechsel) erfasst werden kann.

Insbesondere wird vorgeschlagen: Ein Verfahren zur Vermessung von Werkstücken, wobei die Werkstücke gleichen Typs sind und wobei

- für eine Vielzahl der Werkstücke des gleichen Typs entsprechend einer Messvorschrift jeweils an gleicher vorgegebener Position ein Oberflächenpunkt des Werkstücks als ein durch die Messvorschrift ausgezeichneter Messpunkt vermessen wird und als Ergebnis für jedes vermessene Werkstück ein Messwert erhalten wird,

- aus einer vorab durchgeführten Vermessung von anderen Werkstücken des gleichen Typs, bei der für die anderen Werkstücke jeweils derselbe ausgezeichnete Messpunkt und eine Vielzahl weiterer Oberflächenpunkte als weitere Messpunkte vermessen wurden, Information über eine bestehende Korrelation der Messwerte des ausgezeichneten Messpunkts zu den Messwerten der weiteren Messpunkte zur Verfügung steht,

- bei der Vermessung der Vielzahl der Werkstücke des gleichen Typs entsprechend der Messvorschrift nicht lediglich der ausgezeichnete Messpunkt vermessen wird, sondern bei jedem der Vielzahl der Werkstücke auch zumindest ein Oberflächenpunkt als zusätzlicher Messpunkt vermessen wird, sodass als Ergebnis für jedes vermessene Werkstück ein Messwert für den ausgezeichneten Messpunkt und ein Messwert für jeden zusätzlichen Messpunkt erhalten wird,

- der zusätzliche Messpunkt in einem Oberflächenbereich liegt, in dem gemäß der Information aus der vorab durchgeführten Vermessung eine Korrelation der Messwerte des ausgezeichneten Messpunkts zu den Messwerten des zusätzlichen Messpunkts zu erwarten ist, und

- durch Auswertung der Messwerte des ausgezeichneten Messpunkts und der Messwerte des zusätzlichen Messpunkts oder der zusätzlichen Messpunkte überprüft wird, ob die Korrelation der Messwerte des ausgezeichneten Messpunkts zu den Messwerten des zusätzlichen Messpunkts oder der zusätzlichen Messpunkte vorhanden ist und/oder wie hoch die Korrelation ist, und ein Prüfergebnis ausgegeben wird.

Es ist darauf hinzuweisen, dass es außer den Werkstücken, bei denen auch der zumindest eine Oberflächenpunkt vermessen wird, auch weitere Werkstücke geben kann, bei denen zwar der ausgezeichnete Messpunkt vermessen wird, nicht jedoch ein zusätzlicher Messpunkt, für dessen Messwerte eine Korrelation mit den Messwerten des ausgezeichneten Messpunkts erwartet wird. Außer der Vielzahl der Werkstücke gleichen Typs gibt es in diesem Fall zumindest ein weiteres Exemplar der Werkstücke gleichen Typs, für welches außerdem ausgezeichneten Messpunkt kein zusätzlicher Messpunkt vermessen wird, um die Korrelation zu überprüfen. Dem liegt der Gedanke zugrunde, dass eine Überprüfung der Korrelation nicht anhand von Messwerten aller vermessenen Werkstücke ermittelt werden muss, auch wenn dies bevorzugt wird.

Ferner wird eine Anordnung mit zumindest einem Koordinatenmessgerät und einer Auswertungseinrichtung zur Auswertung von Messwerten vorgeschlagen, die von dem zumindest einen Koordinatenmessgerät erzeugt werden, wobei die Auswertungseinrichtung ausgestaltet ist, Messwerte aus einer Vermessung von Werkstücken auszuwerten, die gleichen Typs sind. Die Anordnung dient insbesondere zur Durchführung des Verfahrens in einer seiner Ausgestaltungen.

Das zumindest eine Koordinatenmessgerät ist ausgestaltet, für eine Vielzahl der Werkstücke des gleichen Typs entsprechend einer Messvorschrift jeweils an gleicher vorgegebener Position bezogen auf ein Koordinatensystem des Werkstücks einen Oberflächenpunkt des Werkstücks als einen durch die Messvorschrift ausgezeichneten Messpunkt zu vermessen und als Ergebnis für jedes vermessene Werkstück einen Messwert zu erzeugen.

Die Auswertungseinrichtung ist ausgestaltet, aus einer vorab durchgeführten Vermessung von anderen Werkstücken des gleichen Typs, bei der für die anderen Werkstücke jeweils derselbe ausgezeichnete Messpunkt und eine Vielzahl weiterer Oberflächenpunkte als weitere Messpunkte vermessen wurden, Information über eine bestehende Korrelation der Messwerte des ausgezeichneten Messpunkts zu den Messwerten der weiteren Messpunkte zu erhalten und zu verwenden.

Das zumindest eine Koordinatenmessgerät ist ausgestaltet, bei der Vermessung der Vielzahl der Werkstücke des gleichen Typs entsprechend der Messvorschrift nicht lediglich den ausgezeichneten Messpunkt zu vermessen, sondern bei jedem der Vielzahl der Werkstücke auch zumindest einen Oberflächenpunkt als zusätzlicher Messpunkt zu vermessen, sodass als Ergebnis für jedes vermessene Werkstück ein Messwert für den ausgezeichneten Messpunkt und ein Messwert für jeden zusätzlichen Messpunkt erzeugt wird.

Der zusätzliche Messpunkt liegt in einem Oberflächenbereich, in dem gemäß der Information aus der vorab durchgeführten Vermessung eine Korrelation der Messwerte des ausgezeichneten Messpunkts zu den Messwerten des zusätzlichen Messpunkts zu erwarten ist.

Die Auswertungseinrichtung ist ausgestaltet, durch Auswertung der Messwerte des ausgezeichneten Messpunkts und der Messwerte des zusätzlichen Messpunkts oder der zusätzlichen Messpunkte zu überprüfen, ob die Korrelation der Messwerte des ausgezeichneten Messpunkts zu den Messwerten des zusätzlichen Messpunkts oder der zusätzlichen Messpunkte vorhanden ist und/oder wie hoch die Korrelation ist, und ein Prüfergebnis auszugeben.

Die Auswahl des zusätzlichen Messpunkts oder der zusätzlichen Messpunkte findet vorzugsweise bei der Erstellung der Messvorschrift statt, gemäß der die Messpunkte der Vielzahl von Werkstücken gleichen Typs vermessen werden. Die Auswahl kann zufällig sein, d. h. es wird zufällig ein zusätzlicher Messpunkt ausgewählt, der in dem Oberflächenbereich liegt, in dem die Messwerte der Oberflächenpunkte mit dem ausgezeichneten Messpunkt korreliert sind. Zum Beispiel gilt dies für alle Messpunkte desselben Clusters wie der ausgezeichnete Messpunkt.

Bevorzugt wird jedoch, dass bei einer Auswahl des zusätzlichen Messpunkts oder zumindest eines der zusätzlichen Messpunkte ein vorgegebener Mindestabstand zu dem ausgezeichneten Messpunkt und vorzugsweise auch zu jedem bereits ausgewählten zusätzlichen Messpunkt eingehalten wird. Anders ausgedrückt wird der zusätzliche Messpunkt so gewählt, dass er den vorgegebenen Mindestabstand zu dem ausgezeichneten Messpunkt bzw. zu jedem bereits ausgewählten zusätzlichen Messpunkt hat. Hierdurch kann gewährleistet werden, dass der zusätzliche Messpunkt für eine Überprüfung des Vorhandenseins der Korrelation geeignet ist. Bei zwei sehr nahe aneinander liegenden Messpunkten ist dies nicht der Fall.

Insbesondere kann der Abstand entlang dem Verlauf der Oberfläche des Werkstücks zu bestimmen sein. Zum Beispiel liegen daher zwei Oberflächenpunkte an gegenüberliegenden Oberflächen eines dünnen Blechs in diesem Sinne nicht in einem Abstand zueinander, der gleich der Blechdicke ist. Es ist jedoch auch möglich, den Abstand als den Abstand im dreidimensionalen Raum zu definieren. Welche Definition des Abstandes gewählt wird, kann vom Einzelfall abhängig gemacht werden und insbesondere der Frage, welche Definition gewährleistet, dass zusätzliche Messpunkte mit zu kleinem Abstand, die für die Überprüfung des Vorhandenseins der Korrelation ungeeignet sind, ausgeschlossen werden.

Eine geeignete Auswahl eines zusätzlichen Messpunkts findet alternativ oder zusätzlich statt, wenn der zusätzliche Messpunkt in einem Randbereich des Oberflächenbereichs mit Messpunkten liegt, deren Messwerte miteinander korreliert sind. Dem liegt der Gedanke zugrunde, dass die Messwerte der in dem Randbereich des Oberflächenbereichs liegenden Messpunkte bei Änderung der Umstände, die zu der Korrelation führen, in der Regel deutlich nicht mehr mit den Messwerten des ausgezeichneten Messpunkts korreliert sind. Anders ausgedrückt sind die Messwerte der Messpunkte in dem Randbereich in vielen Fällen am schwächsten mit den Messwerten eines zentral in dem Oberflächenbereich liegenden Messpunkts korreliert und handelt es sich bei dem ausgezeichneten Messpunkt in der Regel um einen solchen zentralen Messpunkt.

Es wird daher bevorzugt, dass bei einer Auswahl des zusätzlichen Messpunkts oder eines der zusätzlichen Messpunkte ein vorgegebener Mindestabstand zu dem ausgezeichneten Messpunkt eingehalten wird.

Die Einhaltung des Mindestabstands kann auf verschiedene Weise gewährleistet werden. Zum Beispiel kann zunächst ein zusätzlicher Messpunkt zufällig ausgewählt werden und dann gegebenenfalls verworfen werden, wenn der Mindestabstand nicht eingehalten wird. In diesem Fall kann so lange zufällig ein weiterer zusätzlicher Messpunkt ausgewählt werden, bis ein zusätzlicher Messpunkt gefunden ist, für den der Mindestabstand eingehalten ist. Dieser zusätzliche Messpunkt ist dann ein gültiger zusätzlicher Messpunkt. Es kann alternativ zu einer zufälligen Auswahl eine Auswahl auf Basis zumindest eines Kriteriums stattfinden. Insbesondere kann unmittelbar eine Auswahl eines zusätzlichen Messpunkts stattfinden, der den Mindestabstand einhält. Alternativ kann eine Auswahl auf Basis eines Kriteriums wie Lage des zusätzlichen Messpunkts im Randbereich des Oberflächenbereichs der Messpunkte mit korrelierten Messwerten stattfinden und dann die Einhaltung des Mindestabstands überprüft werden. Wie bei der zufälligen Auswahl kann dann der zunächst ausgewählte zusätzliche Messpunkt verworfen werden oder als gültiger Messpunkt akzeptiert werden. Alternativ oder zusätzlich kann aus den einem Cluster (siehe oben) zugeordneten Messpunkten, oder aus den in dem Oberflächenbereich des Clusters liegenden Messpunkten ein zusätzlicher Messpunkt ausgewählt werden, dessen Messwert eine verhältnismäßig geringe Korrelation zu dem Messwert des ausgezeichneten Messpunkts oder des zentralen Messpunkts des Clusters aufweist. Als verhältnismäßig geringe Korrelation kann insbesondere eine Korrelation definiert sein und damit vorgegeben sein, die unter einem Schwellenwert liegt oder - in einem anderen Fall - höchstens gleich einem Schwellenwert ist.

Insbesondere im Laufe der Zeit können verschiedene Mengen der Werkstücke des gleichen Typs vermessen werden und kann jeweils für eine Menge der Werkstücke das Vorhandensein der Korrelation überprüft werden. Die oben bereits beschriebene Vermessung der Vielzahl der Werkstücke des gleichen Typs kann daher als eine Vermessung einer ersten Vielzahl der Werkstücke des gleichen Typs betrachtet werden. Es wird außerdem eine zweite Vielzahl der Werkstücke des gleichen Typs vermessen, wobei bei jedem der zweiten Vielzahl der Werkstücke auch zumindest ein anderer zusätzlicher Messpunkt vermessen wird, der in dem Oberflächenbereich, in dem gemäß der Information aus der vorab durchgeführten Vermessung eine Korrelation der Messwerte des ausgezeichneten Messpunkts zu den Messwerten des zusätzlichen Messpunkts zu erwarten ist, an anderer Position als der zusätzliche Messpunkt oder als alle zusätzlichen Messpunkte bei der Vermessung der ersten Vielzahl der Werkstücke des gleichen Typs liegt, und wobei durch Auswertung der Messwerte des ausgezeichneten Messpunkts und des zumindest einen anderen zusätzlichen Messpunkts überprüft wird, ob die Korrelation der Messwerte des ausgezeichneten Messpunkts zu den Messwerten des zusätzlichen Messpunkts oder der zusätzlichen Messpunkte vorhanden ist und/oder wie hoch die Korrelation ist, und ein Prüfergebnis ausgegeben wird.

Wenn es bei der Vermessung der zweiten Vielzahl der Werkstücke des gleichen Typs mehr als einen zusätzlichen Messpunkt gibt, müssen die zusätzlichen Messpunkte nicht alle an anderer Position als der zusätzliche Messpunkt oder alle zusätzlichen Messpunkte bei der Vermessung der ersten Vielzahl der Werkstücke des gleichen Typs liegen. Es kann daher zum Beispiel lediglich einer der zusätzlichen Messpunkte bei der Vermessung der zweiten Vielzahl der Werkstücke an einer neuen Position liegen. Vorzugsweise werden bei der Überprüfung der Korrelation der Messwerte die Messwerte aller zusätzlichen Messpunkte ausgewertet und bei der Überprüfung mit einbezogen, auch wenn nicht alle zusätzlichen Messpunkte an anderer Position liegen als bei der Vermessung der ersten Vielzahl der Werkstücke des gleichen Typs.

Vorzugsweise wird bei der Auswahl eines Messpunkts, der an anderer Position als der zusätzliche Messpunkt oder als alle zusätzlichen Messpunkte bei der Vermessung der ersten Vielzahl der Werkstücke liegt, ein Mindestabstand eingehalten, damit die Verlagerung der Position nicht zu klein ausfällt und somit unter Umständen nicht zu einer anderen Information als ohne Verlagerung der Position führt. Unter einer Verlagerung wird auch verstanden, dass alle zusätzlichen Messpunkte bei der Vermessung der ersten Vielzahl der Werkstücke auch bei der Vermessung der zweiten Vielzahl der Werkstücke noch vorhanden sind und somit ein weiterer zusätzlicher Messpunkt vermessen wird. Bezüglich des Mindestabstandes und der Auswahl des an anderer Position liegenden Messpunkts wird ansonsten auf die Überlegungen und Kriterien bezüglich des Mindestabstandes zwischen einem zusätzlichen Messpunkt und dem ausgezeichneten Messpunkt verwiesen. Insbesondere kann die Auswahl zunächst zufällig stattfinden oder gemäß zumindest einem vorgegebenen Kriterium stattfinden und/oder kann ein zunächst ausgewählter zusätzlicher Messpunkt verworfen oder als gültiger Messpunkt akzeptiert werden.

Die Verwendung eines zusätzlichen Messpunkts mit anderer Position als bei der Vermessung der ersten Vielzahl der Werkstücke des gleichen Typs hat den Vorteil, dass die bestehende Korrelation der Messwerte auf andere Weise überprüft werden kann, nämlich auf Basis von Messwerten von zumindest einem anderen Messpunkt. Die Sicherheit der Überprüfung wird somit erhöht, wobei gleichzeitig der Aufwand für die Vermessung, der mit der Anzahl der Messpunkte steigt, nicht oder nicht wesentlich erhöht werden muss. Zum Beispiel kann nach erfolgreicher Überprüfung und Bestätigung der bestehenden Korrelation auf Basis der Vermessung der Messpunkte der ersten Vielzahl von Werkstücken, für die folgende Vermessung der zweiten Vielzahl der Werkstücke des gleichen Typs zumindest ein zusätzlicher Messpunkt mit anderer Position als bei der Vermessung der ersten Vielzahl von Werkstücken vermessen werden.

Insbesondere kann der Oberflächenbereich, in dem gemäß der Information aus der vorab durchgeführten Vermessung eine Korrelation der Messwerte des ausgezeichneten Messpunkts zu den Messwerten des zusätzlichen Messpunkts zu erwarten ist, in eine Mehrzahl von Teil-Oberflächenbereichen zerlegt werden. In den Teil-Oberflächenbereichen ist eine höhere Korrelation der Messwerte der Oberflächenpunkte als in dem nicht zerlegten Oberflächenbereich zu erwarten, wobei für jeden der Teil-Oberflächenbereiche und bei jedem der Vielzahl der Werkstücke ein ausgezeichneter Messpunkt und zumindest ein zusätzlicher Messpunkt vermessen werden und wobei in Bezug auf jeden der Teil-Oberflächenbereiche durch Auswertung der Messwerte des ausgezeichneten Messpunkts und der Messwerte des zusätzlichen Messpunkts oder der zusätzlichen Messpunkte überprüft wird, ob die Korrelation der Messwerte des ausgezeichneten Messpunkts zu den Messwerten des zusätzlichen Messpunkts oder der zusätzlichen Messpunkte vorhanden ist und/oder wie hoch die Korrelation ist, und ein Prüfergebnis ausgegeben wird.

Auf diese Weise kann die Sensitivität der Überprüfung der Korrelation erhöht werden. Diese Vorgehensweise beruht auf dem Ergebnis der Vorab-Vermessung der Werkstücke des gleichen Typs und der Korrelationsanalyse, gemäß der in den Teil-Oberflächenbereichen eine höhere Korrelation der Messwerte der Oberflächenpunkte als in dem nicht zerlegten Oberflächenbereich zu erwarten ist. Dies muss nicht in allen Fällen zutreffen. Es trifft aber in vielen Fällen zu. Bereits wenn ein Oberflächenbereich verkleinert wird, fallen häufig Oberflächenpunkte mit erwarteten Messwerten weg, die die geringste Korrelation mit den Messwerten des ausgezeichneten Punkts haben. Insbesondere gilt dies, wenn durch die Verkleinerung des Oberflächenbereichs Randpunkte wegfallen. Insbesondere kann die Zerlegung des Oberflächenbereichs vorteilhaft dann durchgeführt werden, wenn erwartet wird, dass die Korrelation jeweils in dem Oberflächenbereich und den Teil-Oberflächenbereichen nicht kleiner als eine vorgegebene minimale Korrelation ist und die vorgegebene minimale Korrelation in den Teil-Oberflächenbereichen größer als in dem gesamten, unzerlegten Oberflächenbereich ist.

Insbesondere wenn die Werkstücke geometrisch vergleichbar sind, dann können die Messpunkte der verschiedenen Werkstücke einander zugeordnet werden und haben insbesondere dieselbe Vergleichskoordinate (wenn eine Koordinate des Messpunktes gemessen wird/wurde) oder dieselben Vergleichskoordinaten (wenn eine Mehrzahl von Koordinaten des Messpunktes gemessen wird/wurde). Die Vergleichskoordinate(n) ist/sind insbesondere eine Koordinate bzw. Koordinaten einer Soll-Form, die beispielsweise durch CAD-Daten definiert ist.

Insbesondere wird das Verfahren unter Verwendung zumindest eines Datenverarbeitungs-Rechners ausgeführt. Als Rechner kommen handelsübliche Computer wie Server, Notebooks, Laptops, Desktops infrage, aber auch speziell ausgestaltete Recheneinheiten mit integrierten Schaltkreisen wie Grafikprozessoren, DSPs (digitale Signalprozessoren), Mikrocontroller, ASICs (anwendungsspezifische integrierte Schaltungen), ASSPs (anwendungsspezifische Standardprodukte) und/oder FPGAs (Field Programmable Gate Array). Es kann auch ein Netzwerk mehrerer der genannten Rechner zur Bestimmung der Korrelation und/oder Überprüfung der Korrelation verwendet werden. Dabei können dieselben Typen von Rechnern in dem Netzwerk verwendet werden oder unterschiedliche Typen. Die Messwerte können in computerlesbarer Form in zumindest einem Datenspeicher gespeichert sein, sodass der zumindest eine Rechner zur Bestimmung und/oder Überprüfung der Korrelation auf den Datenspeicher zugreifen kann. Hierzu kann zum Beispiel zumindest ein Permanent-Datenspeicher und/oder ein Arbeitsspeicher verwendet werden.

Die Auswertungseinrichtung zur Auswertung von Messwerten kann daher den zumindest einen Datenverarbeitungs-Rechner aufweisen, der ausgestaltet ist, die Korrelation zu ermitteln und/oder zu überprüfen. Der Datenverarbeitungs-Rechner kann einen Datenprozessor oder eine Anordnung von Datenprozessoren aufweisen, der/die konfiguriert ist, das erfindungsgemäße Verfahren in einer seiner Ausgestaltungen durchzuführen, mit Ausnahme der Vermessung der Werkstücke.

Ferner kann der zumindest eine Datenverarbeitung-Rechner ein Computer sein, der ein Computerprogramm und ein computerlesbares Speichermedium aufweist. Das Computerprogramm umfasst Befehle, die bei der Ausführung des Programms durch einen Computer oder durch ein Computernetzwerk diesen/dieses veranlassen, das Verfahren gemäß der vorliegenden Erfindung in einer seiner Ausgestaltungen auszuführen, mit Ausnahme der Vermessung der Werkstücke. Das computerlesbare Speichermedium umfasst Befehle, die bei der Ausführung durch einen Computer oder durch ein Computernetzwerk diesen/dieses veranlassen, das Verfahren gemäß der vorliegenden Erfindung in einer seiner Ausgestaltungen auszuführen.

In der folgenden Figurenbeschreibung wird ein Ausführungsbeispiel für die Vermessung von Werkstücken beschrieben. Bei dem Ausführungsbeispiel wird ein Koordinatenmessgerät in Portalbauweise verwendet, an dem ein optischer Sensor angeordnet ist, um jeweils ein Werkstück zu vermessen. Wie bereits erwähnt, kann es sich jedoch alternativ um ein anderes Koordinatenmessgerät und/oder einen anderen Sensor handeln. Insbesondere ist es daher möglich, mit zumindest einem Koordinatenmessgerät Werkstücke des gleichen Typs zunächst optisch vorab zu vermessen und wie oben beschrieben eine Korrelationsanalyse auszuführen und dann mit demselben Koordinatenmessgerät oder mit verschiedenen Koordinatenmessgeräten andere Werkstücke des gleichen Typs taktil zu vermessen und die auf Basis der durch taktile Antastung der Oberfläche dieser Werkstücke erhaltenen Messwerte zur Überprüfung der Korrelation zu verwenden.

Ausführungsbeispiele der Erfindung werden nun unter Bezugnahme auf die beigefügte Zeichnung beschrieben. Die einzelnen Figuren der Zeichnung zeigen:

Fig. 1      schematisch ein Koordinatenmessgerät mit einem optischen Messsensor, in dessen Messbereich ein Werkstück angeordnet ist, wobei die Anordnung schematisch außerdem einen mit dem Koordinatenmessgerät verbundenen Computer zeigt,

Fig. 2      eine Draufsicht auf ein Beispiel für ein Werkstück,

Fig. 3      eine stirnseitige Ansicht des in Fig. 2 dargestellten Werkstücks,

Fig. 4      eine Draufsicht auf ein anderes Werkstück, welches einen Formfehler aufweist,

Fig. 5      die Draufsicht auf das in Fig. 2 und Fig. 3 dargestellte Werkstück, wobei zusätzlich Cluster aus Messpunkten dargestellt sind,

Fig. 6      eine Draufsicht auf das in Fig. 4 dargestellte Werkstück, wobei ein Cluster von Messpunkten zusätzlich dargestellt ist,

Fig. 7      ein Flussdiagramm zur Darstellung von Schritten bei der Vermessung einer Vielzahl von Werkstücken gleichen Typs entsprechend einer Messvorschrift und von Schritten zur Überprüfung einer erwarteten Korrelation,

Fig. 8      ein Ausführungsbeispiel für eine Anordnung mit zumindest einem Koordinatenmessgerät und einer Auswertungseinrichtung zur Auswertung von Messwerten beschrieben,

Fig. 9      ein Flussdiagramm zur Darstellung eines Ausführungsbeispiels eines Verfahrens, bei dem für eine Mehrzahl der Sätze von Messdaten jeweils in Bezug auf ein Paar von Messpunkten ein Maß der Korrelation bestimmt wird, und

Fig. 10      ein Flussdiagramm, das Schritte bei der Auswertung der bestimmten Maße der Korrelation zeigt, wobei Cluster von miteinander korrelierten Messpunkten gebildet werden.

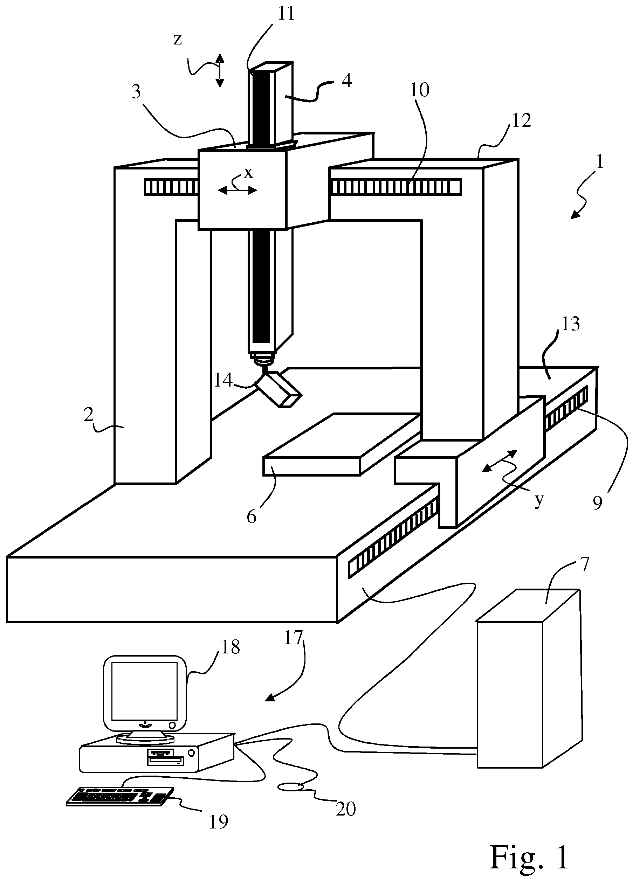

Fig. 1 zeigt ein Koordinatenmessgerät 1 in Portalbauweise. Auf einer Basis 13 des Koordinatenmessgeräts 1 ist ein Werkstück 6 angeordnet, welches unter Verwendung eines optischen Sensors 14, z.B. einer Kamera, vermessen wird. Aufgrund der Portalbauweise ist der optische Sensor 14 relativ zu dem Werkstück 6 beweglich. Alternativ kann statt des optischen Sensors ein taktiler Sensor, zum Beispiel ein Sensor mit einem Taststift vorhanden sein. Das Portal 2 des Koordinatenmessgeräts 1 ist in einer ersten mit y bezeichneten Richtung linear beweglich. Die Position des Portals 2 kann z.B. unter Verwendung eines Maßstabes 9 in der y-Richtung ermittelt werden. An der Traverse 12 des Portals 2 ist ein Schlitten 3 in einer mit x bezeichneten Richtung linear verfahrbar. Die Position des Schlittens 3 relativ zu dem Portal 2 kann z.B. anhand eines Maßstabes 10 bestimmt werden. An dem Schlitten 3 ist wiederum eine Pinole 4 in einer mit z bezeichneten Richtung linear beweglich angeordnet. Der optische Sensor 14 ist am unteren Ende der Pinole 4 angeordnet, vorzugsweise um zumindest eine Drehachse beweglich relativ zur Pinole 4. Die vertikale Position der Pinole 4 und des optischen Sensors 14 kann z.B. anhand eines Maßstabes 11 entlang der Pinole 4 ermittelt werden. Die Richtungen x, y und z bilden ein kartesisches Koordinatsystem.

Wie schematisch rechts unten in Fig. 1 dargestellt ist, ist eine Steuerung 7 des Koordinatenmessgeräts 1 vorgesehen, die die Vermessung des Werkstücks 6 oder anderer Werkstücke steuert und die Messdaten von dem optischen Sensor 14 empfängt und optional aufzeichnet. Alternativ können die Messdaten von der Steuerung 7 direkt an einen Computer 17 weitergeleitet werden, der links unten in Fig. 1 schematisch dargestellt ist. Der Computer 17 ist mit einem Bildschirm 18 und zumindest einer Tastatur 19 sowie optional mit weiteren Bedieneinrichtungen wie einer Computermaus 20 ausgestattet. Wie anhand eines Ausführungsbeispiels noch näher ausgeführt wird, kann der Computer 17 ausgestaltet sein, z.B. durch entsprechend ausgestaltete Software (z. B. zumindest ein Computerprogramm), die auf ihm ausgeführt wird, Messwerte aus der Vermessung mehrerer Werkstücke durch das Koordinatenmessgerät 1 auszuwerten. Dabei kann insbesondere jeweils für Paare von Messpunkten eine Korrelation, insbesondere ein Maß der Korrelation, für die Messwerte aller Werkstücke bestimmt werden. Die anhand von Fig. 1 beschriebene Ausführungsform mit einem Computer ist lediglich ein Beispiel. In der Praxis kann statt eines lokalen Personal-Computers zum Beispiel ein Computer-Server verwendet werden, auf den mehrere lokale Computer über ein Computer-Netzwerk Zugriff haben. Alternativ oder zusätzlich kann ein Hand-Held-Computer, wie beispielsweise ein Smartphone und/oder ein Tablet-Computer, zur Auswertung der Messdatensätze verwendet werden.

Insbesondere weisen die Messdatensätze in der Art eines Zeilenvektors oder Spaltenvektors eine Mehrzahl von Messwerten auf. Jeder Messwert bildet ein Element des Vektors und ist das Ergebnis der Vermessung eines einzelnen Messpunktes des Werkstücks, dem der Messdatensatz zugeordnet ist. Die Messwerte der verschiedenen Messdatensätze sind derart in gleicher Weise strukturiert, geordnet oder auf sie kann derart zugegriffen werden, dass die für die einander entsprechenden Messpunkte der verschiedenen Werkstücke zugeordnete Messwerte zur Auswertung der Messdatensätze ermittelbar und/oder verwendbar ist. Auf diese Weise können zu den einander entsprechenden Messpunkten der verschiedenen Werkstücke jeweils die in den Messdatensätzen enthaltene Messwerte geladen werden und steht jeweils zusammen mit den Messwerten anderer Messpunkte zur Bestimmung der Korrelation zur Verfügung. Die Messwerte aller Messdatensätze können somit z.B. mathematisch in Matrixform dargestellt werden, wie die folgende Matrix zeigt:

$$
\begin{array}{c|cccc}
 & M1 & M2 & & Mk \\
\hline
C1 & 0{,}2 & 0{,}6 & \ldots & 0{,}5 \\
C2 & 0{,}4 & 1{,}3 & \ldots & 1{,}0 \\
\ldots & & & & \\
Cn & 0{,}7 & 0{,}8 & \ldots & 0{,}3
\end{array}
$$

Bei der Matrix handelt es sich um eine Matrix mit n Zeilen und k Spalten. Dabei sind k die Anzahl der Messdatensätze M und n die Anzahl der Messpunkte und somit auch der Messwerte C in jedem Messdatensatz M. Daher sind die Messdatensätze M mit einem Index von 1 bis k bezeichnet und die Messwerte C mit einem Index von 1 bis n bezeichnet. Die Zahlenwerte in der oben wiedergegebenen Matrix dienen lediglich als Beispiele. Sie können andere Werte aufweisen und können jeweils auch mehr als einen Wert aufweisen, z.B. wenn pro Messpunkt mehr als eine Koordinate oder eine Koordinatenabweichung gemessen wurde.

Bei der Vorab-Vermessung der Werkstücke gleichen Typs zum Zwecke der Korrelationsanalyse auf Basis einer sehr hohen Anzahl von Messpunkten, wie sie durch eine optische Messung insbesondere mittels bildgebender Sensoren oder scannender optischer Sensoren ermöglicht ist, wird die Anzahl n der Messpunkte pro Werkstück in der Regel sehr viel größer sein als bei der später stattfindenden Vermessung weiterer Werkstücke des gleichen Typs und der Überprüfung, ob die Korrelation noch besteht. Die Anzahl k der Messdatensätze M kann jedoch gleich groß sein, in der gleichen Größenordnung liegen oder zumindest nicht wesentlich geringer sein als bei der Vorab-Vermessung. Die folgende Beschreibung der Vermessung von Werkstücken und der Bestimmung der Korrelation trifft auf beide Anwendungen zu, auf die Korrelationsanalyse auf Basis der Vorab-Vermessung und auf die Überprüfung der Korrelation, wobei der Rechenaufwand für letztere wegen der sehr viel geringeren Anzahl von Messpunkten deutlich geringer ist. Die folgende Beschreibung der Clusterbildung trifft selbstverständlich nur auf die Korrelationsanalyse auf Basis der Vorab-Vermessung zu.

Insbesondere wenn für jedes Paar der Messpunkte C, die in der vorangegangenen dargestellten Matrix enthalten sind, ein Maß der Korrelation über alle Messdatensätze M bestimmt worden ist, können die Korrelationen beispielsweise wie in der folgenden Korrelationsmatrix dargestellt werden. Bei einer Datenverarbeitung durch Computer können entsprechende mathematische Darstellungen für die Datenverarbeitung implementiert werden. Die folgende Korrelationsmatrix betrifft nicht nur den speziellen Fall, dass pro Messwert lediglich eine Koordinate betrachtet wird und der Messwert daher die Koordinate oder eine Abweichung zu einer Vergleichskoordinate enthält. Eine Korrelation kann vielmehr auch dann angegeben werden, wenn mehrere Koordinaten oder Abweichungen pro Messpunkt betrachtet werden.

$$
\begin{array}{c|cccc}
 & C1 & C2 & & Cn \\
\hline
C1 & 1{,}0 & 0{,}9 & \ldots & 0{,}1 \\
C2 & & 1{,}0 & \ldots & -0{,}05 \\
\ldots & & & & \\
Cn & & & \ldots & 1{,}0
\end{array}
$$

Da die Korrelationsmatrix auch die Korrelation der Messpunkte C mit sich selbst enthält, ist auf der Diagonalen der Matrix jeweils der Wert "1,0" eingetragen. Die bestimmten Maße der Korrelation sind rechts oberhalb der Diagonalen eingetragen. Es handelt sich daher um eine Dreiecksmatrix. Wie die drei beispielsweise eingetragenen Maße der Korrelation zeigen, können sowohl positive als auch negative Korrelationsmaße vorkommen. In dem Beispiel handelt es sich um die Pearson-Korrelation, die durch einen Korrelationskoeffizienten dargestellt wird, der von dem Wert -1 bis zu dem Wert +1 betragen kann. Jegliche andere Form der Darstellung oder Beschreibung der Messdatensätze und der Korrelationsmaße ist möglich.

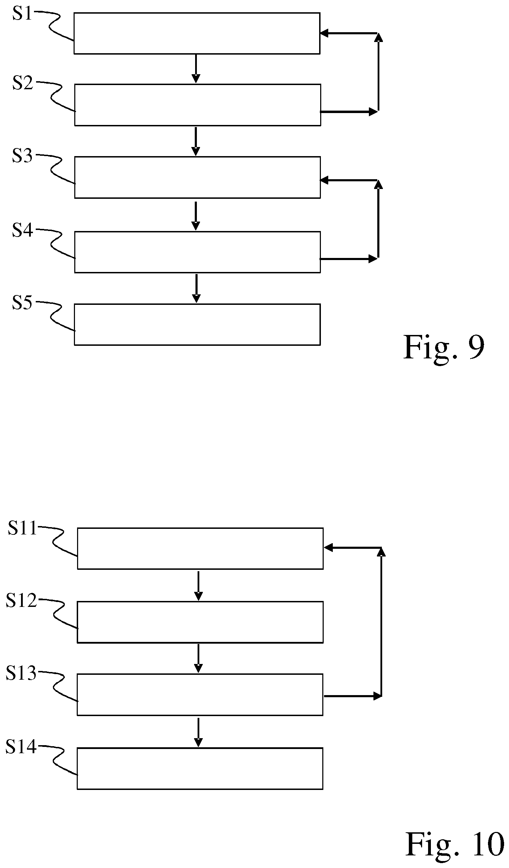

Bei der Erzeugung und Auswertung von Messdaten und der Bestimmung der Korrelation kann z.B. wie folgt vorgegangen werden. Dabei wird Bezug genommen auf Fig. 9.

Z.B. mittels des in Fig. 1 dargestellten Koordinatenmessgeräts 1 wird in Schritt S1 ein Werkstück vermessen, sodass an einer Mehrzahl von Messpunkten des Werkstücks Koordinaten bestimmt werden. Im folgenden Schritt S2 werden die durch die Vermessung der Messpunkte des Werkstücks erhaltenen Messwerte gespeichert, insbesondere in Form eines Satzes von Messdaten. Der Messdatensatz kann jedoch auch erst später erzeugt werden. Ein Messdatensatz ist jeweils dem vermessenen Werkstück zugeordnet. Wie durch eine von Schritt S2 in Fig. 9 ausgehende Pfeilkette zu Schritt S1 dargestellt ist, werden die Schritte S1 und S2 für so viele Werkstücke wiederholt wie Werkstücke zu vermessen sind. Insbesondere können die Werkstücke entsprechend derselben Soll-Form gefertigt sein.

Nachdem alle zu berücksichtigenden Werkstücke vermessen sind, wird in Schritt S3 für ein Paar von Messpunkten, die einander entsprechend bei allen vermessenen Werkstücken vorhanden sind, ein Maß der Korrelation bestimmt. Das Maß der Korrelation wird in dem folgenden Schritt S4 gespeichert. Wie durch eine von Schritt S4 zu Schritt S3 führende Pfeilkette angedeutet ist, werden auch die Schritte S3 und S4 wiederholt, bis für eine Mehrzahl von Paaren von Messpunkten und vorzugsweise für alle Paare von Messpunkten jeweils ein Maß der Korrelation bestimmt ist und abgespeichert ist. In Schritt S5, der auf Schritt S4 folgt, sobald alle zu bestimmenden Maße der Korrelation bestimmt worden sind, endet das Verfahren. Optional kann in Schritt S5 eine Auswertung der bestimmten Maße der Korrelation durchgeführt werden. Im Fall der Überprüfung der Korrelation auf Basis der Messwerte für den ausgezeichneten Messpunkt und zumindest einen zusätzlichen Messpunkt kann in Schritt S5 ein Signal ausgegeben werden, zumindest wenn die Überprüfung der Korrelation ergeben hat, dass die Korrelation in dem entsprechenden Oberflächenbereich nicht mehr besteht oder nicht mehr dem Kriterium für eine ausreichende Korrelation genügt, zum Beispiel weil ein Mindest-Korrelationsmaß unterschritten wurde.

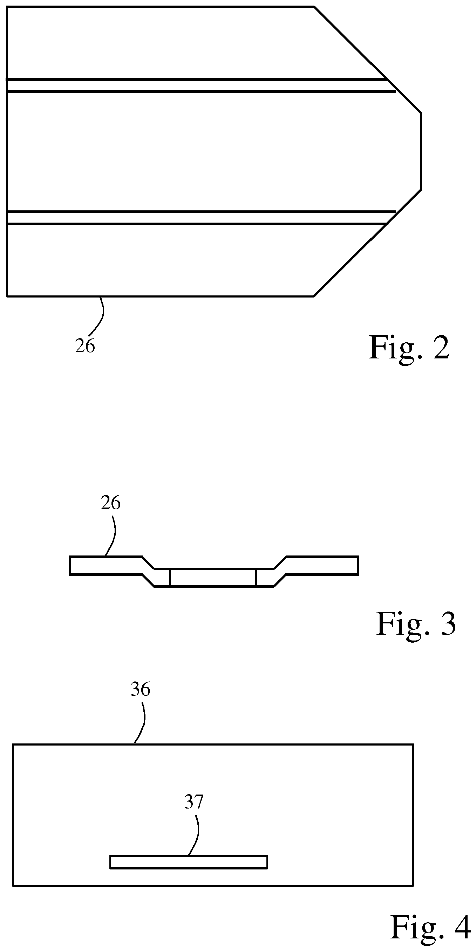

Anhand von Fig. 10 wird noch ein Ausführungsbeispiel für eine Auswertung der bestimmten Maße der Korrelation beschrieben. Zunächst wird jedoch auf die in Fig. 2 bis Fig. 4 schematisch dargestellten Werkstücke eingegangen.

Fig. 2 zeigt in Draufsicht ein Werkstück, dessen Ansicht von vorne in Fig. 3 gezeigt ist. Das dargestellte Werkstück 26 weist einen zweifach abknickenden Verlauf auf, wie Fig. 3 zeigt. Zur Herstellung des abknickenden Verlaufs hat eine Bearbeitung eines plattenförmigen Halbzeugs stattgefunden, beispielsweise ein Tiefziehvorgang. Z.B. wird eine Vielzahl gleichartiger Werkstücke nacheinander in einem Fertigungsprozess hergestellt. Jedes dieser Werkstücke kann z.B. unter Verwendung eines optischen Sensors vermessen werden, sodass für eine Vielzahl von Oberflächenpunkten Koordinaten ermittelt werden. Z.B. reicht es bei dem in Fig. 2 und Fig. 3 dargestellten Werkstück aus, die Koordinaten dieser Messpunkte in Bezug auf eine Koordinatenachse zu bestimmen, die senkrecht zur Figurenebene der Fig. 2 verläuft und die in Fig. 3 in vertikaler Richtung verläuft. Vorzugsweise werden die Koordinaten auf ihre jeweilige Soll-Koordinate bezogen, d.h. in dem entsprechenden Messdatensatz des Werkstücks wird die Differenz zwischen der gemessenen Koordinate und der Soll-Koordinate erfasst.

Eine Draufsicht auf ein Werkstück 36 anderer Art ist in Fig. 4 schematisch dargestellt. Durch einen rechteckigen Bereich 37 ist in Fig. 4 ferner angedeutet, dass das Werkstück 36 einen Bereich aufweist, in dem systematisch eine Abweichung von seiner Soll-Form besteht. Systematisch bedeutet, dass diese Abweichung in allen oder vielen hergestellten Exemplaren des Werkstücks vorhanden ist.

Unter Bezugnahme auf Fig. 10 wird nun ein Ausführungsbeispiel des Verfahrens zur Auswertung der für die Werkstücke bestimmten Maße der Korrelation beschrieben. Zu der Art der Werkstücke, die in Fig. 2 und Fig. 3 dargestellt ist, wurde jeweils eine Vielzahl von Messpunkten vermessen (im Fall der Überprüfung der Korrelation für zumindest den ausgezeichneten Messpunkt und einen zusätzlichen Messpunkt) und für alle Paare von Messpunkten ein Maß der Korrelation über alle erhaltenen Messdatensätze bestimmt. Beispielsweise wurde das Maß der Korrelation als Pearson-Korrelationskoeffizient bestimmt. Ferner wird ein Schwellwert vorgegeben. Alle Paare von Messpunkten, deren Maß der Korrelation größer oder gleich dem Schwellwert ist, werden als hoch miteinander korreliert aufgefasst und als voneinander abhängig interpretiert.

Im Fall der Überprüfung der Korrelation auf Basis der Messwerte des ausgezeichneten Messpunkts und zumindest eines zusätzlichen Messpunkts kann bei einem Maß der Korrelation, das kleiner als der Schwellwert ist oder bei einer alternativen Vorgehensweise kleiner oder gleich dem Schwellwert ist, entschieden werden, dass die Korrelation nicht mehr besteht bzw. nicht mehr in ausreichender Höhe besteht.

Als Ergebnis der Korrelationsanalyse lässt die Abhängigkeit Rückschlüsse auf die Fertigung zu. Außerdem ermöglicht sie Messvorschriften und insbesondere Prüfpläne mit einer geringen Anzahl von Messpunkten zu erstellen.

In Schritt S11 (Fig. 10), der wie die weiteren Schritte S12 bis S14 lediglich bei der Korrelationsanalyse ausgeführt wird, wird ein Messpunkt ermittelt, der von einer großen Anzahl anderer Messpunkte abhängig ist oder der der Messpunkt ist, der von den meisten anderen Messpunkten abhängig ist. Hierzu wird z.B. in der entsprechenden Korrelationsmatrix für jeden Messpunkt die Anzahl der Maße der Korrelation bestimmt, die zumindest gleich dem Schwellwert sind. Selbstverständlich kann der Schwellwert höher oder niedriger vorgegeben werden als durch den Wert 0,9. Um einen Messpunkt mit einer hohen Anzahl von Abhängigkeiten zu bestimmen, kann z.B. eine Mindestanzahl anderer Messpunkte vorgegeben sein/werden, von denen der jeweilige Messpunkt abhängig ist. Der ermittelte Messpunkt mit der hohen Anzahl von Abhängigkeiten oder mit der höchsten Anzahl von Abhängigkeiten wird nun als Clusterzentrum aufgefasst. In dem auf Schritt S11 folgenden Schritt S12 werden für das Clusterzentrum die abhängigen Messpunkte identifiziert.

Alternativ können die abhängigen Messpunkte identifiziert werden, während das Clusterzentrum ermittelt wird. Beispielsweise kann bei der Ermittlung der Anzahl der abhängigen Messpunkte bereits protokolliert bzw. festgehalten werden, um welche abhängigen Messpunkte es sich handelt. Beispielsweise kann für jeden der Messpunkte aus der Korrelationsmatrix eine dem Messpunkt zugeordnete Matrix oder ein Zeilenvektor oder Spaltenvektor gebildet werden, in der/dem in Bezug auf jeden anderen Messpunkt eingetragen wird, ob es sich um einen abhängigen oder nicht abhängigen Messpunkt handelt.

Wenn für ein Clusterzentrum alle abhängigen Messpunkte ermittelt sind, d.h. wenn ein Cluster von Messpunkten mit einem Clusterzentrum ermittelt worden ist, kann die Vorgehensweise wiederholt werden. Hierzu wird aus der Menge der für das Clusterzentrum grundsätzlich infrage kommenden Messpunkte in dem auf Schritt S12 folgenden Schritt S13 das in Schritt S11 ermittelte Clusterzentrum entfernt. Optional werden aus der Menge von Messpunkten auch die in Schritt S12 ermittelten Messpunkte entfernt, die von dem Clusterzentrum abhängig sind. Nun werden die Schritte S11 und S12 wiederholt bzw. wird alternativ in einem Schritt für jedes infrage kommende Clusterzentrum bereits identifiziert, um welche abhängigen Messpunkte es sich handelt.

Wenn alle Cluster identifiziert worden sind, dann kann optional mit Schritt S14 fortgefahren werden. Dabei kann die Anzahl der zu identifizierenden Cluster auf einen Maximalwert begrenzt sein oder kann gefordert sein, dass ein Cluster eine Mindestanzahl von Clusterpunkten, die von dem Clusterzentrum abhängig sind, aufweisen muss.

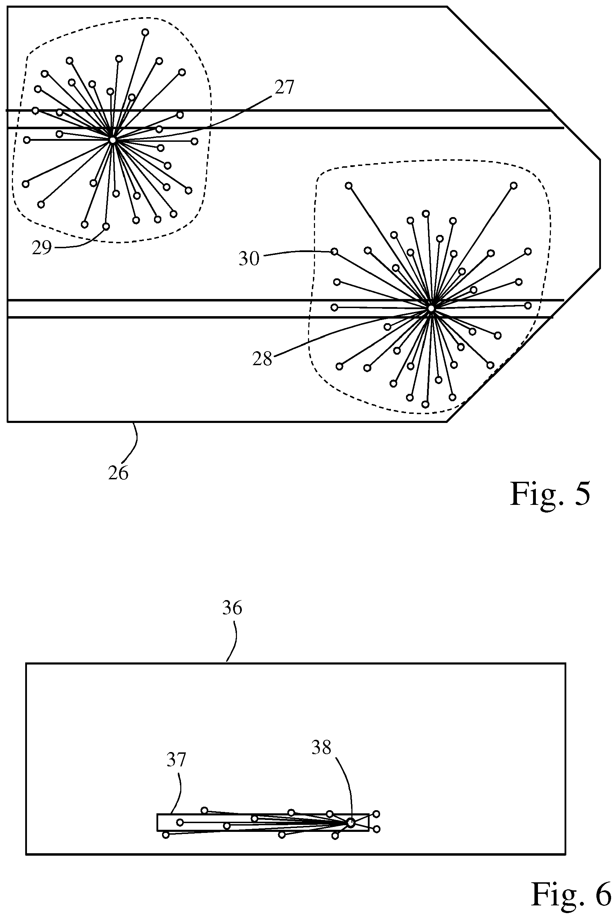

In Schritt S14 kann optional zumindest eines der ermittelten Cluster oder das einzige ermittelte Cluster grafisch dargestellt werden. In dem Ausführungsbeispiel von Fig. 5 sind zwei Cluster grafisch dargestellt, und zwar in einer grafischen Darstellung des Werkstücks 26 aus Fig. 2 und Fig. 3. In dem Ausführungsbeispiel handelt es sich um die Draufsicht aus Fig. 2, die auch zur Darstellung der Cluster in Fig. 5 mitverwendet wird. Man erkennt für jedes der beiden dargestellten Cluster das Clusterzentrum 27, 28 sowie die von dem jeweiligen Clusterzentrum 27, 28 abhängigen Clusterpunkte. Um die Beziehung der Abhängigkeit zu dem Clusterzentrum 27, 28 zu veranschaulichen, ist das Clusterzentrum 27, 28 mit jedem seiner abhängigen Punkte über eine gerade Linie verbunden. Alle Punkte sind durch kleine Kreise in Fig. 5 dargestellt.

Die beiden in Fig. 5 dargestellten Cluster liegen jeweils in einem durch eine gestrichelte Umrisslinie umrandeten Bereich.

Z. B. die Clusterzentren 27, 28 können für das in dieser Beschreibung beschriebene Verfahren als ausgezeichnete Punkte verwendet werden. In diesem Fall werden sie gemäß einer Mesvorschrift bei einer Vielzahl von Werkstücken gleichen Typs vermessen. Es können jedoch auch andere Oberflächenpunkte als die Clusterzentren 27, 28 als die ausgezeichneten Messpunkte verwendet werden, zum Beispiel Oberflächenpunkte in der Nähe der Clusterzentren. Zum Beispiel die mit den Bezugszeichen 29 im Fall des einen Clusters und 30 im Fall des anderen Clusters bezeichneten Oberflächenpunkte können als zusätzliche Messpunkte ebenfalls bei dieser Vielzahl von Werkstücken gleichen Typs vermessen werden.

Aufgrund der Darstellung in Fig. 5 kann ein Betrachter insbesondere unmittelbar erfassen, in welchem Bereich der Oberfläche des Werkstücks sich von dem Clusterzentrum abhängige Messpunkte befinden. Die Darstellungen in Fig. 5 und auch in Fig. 6 sind vereinfachte Darstellungen. Die Anzahl der Punkte pro Cluster ist im Vergleich zur bevorzugten Vorgehensweise in der Praxis stark verringert, um die einzelnen Clusterpunkte erkennbar zu machen.

In der Praxis können zur Darstellung der verschiedenen Cluster verschiedene Farben verwendet werden. Dann ist es nicht mehr erforderlich, dass jeder einzelne Clusterpunkt einzeln vom Betrachter erkannt wird. Anhand der Verbindungslinien der Clusterzentren zu den abhängigen Messpunkten werden die Cluster auch bei einer sehr hohen Anzahl von Messpunkten wahrgenommen. Selbstverständlich ist es möglich, dass ein Betrachter die Darstellung verändern kann und z.B. die Clusterpunkte ausblenden kann, die einer bestimmten Bedingung nicht genügen oder der Bedingung genügen. Auf diese Weise können z.B. Clusterpunkte mit einer Entfernung zum Clusterzentrum kleiner als eine Maximalentfernung oder größer als ein Mindestentfernung dargestellt oder ausgeblendet werden. Dadurch kann der Betrachter darin unterstützt werden, geeignete Clusterpunkte als zusätzlicher Messpunkte für die Vermessung weiterer Werkstücke des gleichen Typs und die spätere Überprüfung der Korrelation auszuwählen.

Zurückkommend auf das in Fig. 2, Fig. 3 und Fig. 5 dargestellte Werkstück 26 befinden sich die Clusterzentren 27, 28 jeweils in einem der durch Bearbeitung des Halbzeugs erzielten Bereich der Verformung. Daher ist auch, wie es den dargestellten Clustern entspricht, die Mehrzahl der abhängigen Messpunkte des jeweiligen Clusterzentrums 27, 28 im Bereich der Verformung und in der Nähe des Clusterzentrums 27, 28 angeordnet. Wie bereits erwähnt, handelt es sich um eine vereinfachte Darstellung. Weitere Messpunkte der Cluster noch näher an dem des jeweiligen Clusterzentrum 27, 28 sind der Erkennbarkeit der Messpunkte wegen nicht dargestellt.

Optional kann nach Schritt S13 oder nach Schritt S14 ein Prüfplan zur Vermessung weiterer Werkstücke der gleichen Art erstellt werden oder geändert werden. Ein Prüfplan weist im Allgemeinen eine Mehrzahl von Messpunkten auf und definiert, welche Messergebnisse durch Vermessung und Auswertung eines Werkstücks erhalten werden sollen, wie z.B. Abstände bestimmter Messpunkte, Durchmesser, Rundheit von zylindrischen Bereichen usw. Aus einem Cluster können z.B. diejenigen Messpunkte aus dem Prüfplan entfernt werden oder nicht in den Prüfplan aufgenommen werden, die einen Abstand zu dem jeweiligen Clusterzentrum aufweisen, der kleiner ist als ein vorgegebener Mindestabstand. Dem liegt der Gedanke zugrunde, dass es zu erwarten ist, dass in geringem Abstand zu einem Clusterzentrum liegende Messpunkte von dem Clusterzentrum abhängig sind. Ist ein Werkstück an dem Clusterzentrum verformt worden, hat dies in sehr vielen Fällen Auswirkungen auf den Nah-Bereich um das Clusterzentrum herum. Durch die Auswahl bzw. Eliminierung von Messpunkten kann die Ausführung des Prüfplans verkürzt werden und/oder die Genauigkeit bei der Ausführung des Prüfplans gesteigert werden, wenn z.B. ein Koordinatenmessgerät mit größerer Messgenauigkeit die zur Verfügung stehende Messzeit ausnutzt.

Die Clusterzentren können bei der späteren Vermessung von weiteren Werkstücken des gleichen Typs als die ausgezeichneten Messpunkte verwendet werden. Ferner können die Clusterzentren mit höherer Genauigkeit vermessen werden als andere Messpunkte. Alternativ oder zusätzlich können einzelne Qualitätsanforderungen auf Clusterzentren bezogen werden. Z.B. kann gefordert sein, dass Werkstücke an zumindest einem Clusterzentrum eine vorgegebene Genauigkeitsanforderung erfüllen und/oder mehrere Werkstücke des gleichen Typs an zumindest einem Clusterzentrum Koordinaten aufweisen, die nicht mehr als um ein vorgegebenes Streuungsmaß von ihrem Mittelwert abweichen.

In Fig. 6 ist zu dem in Fig. 4 dargestellten Werkstück 36 eine Darstellung gewählt, in der auch ein einziges Cluster enthalten ist. Das Clusterzentrum 38 des Clusters liegt in dem Bereich 37, der der systematischen Abweichung von der Soll-Form entspricht. Ferner handelt es sich wieder um ein Ausführungsbeispiel, bei dem die Messwerte in den Messdatensätzen Abweichungen zwischen gemessenen Koordinaten und Soll-Koordinaten sind.

Daher liegen alle Messpunkte des Clusters, die von dem Clusterzentrum 38 abhängig sind, in dem Bereich 37. In der Praxis, wenn der Bereich 37 noch nicht bekannt ist, fällt die örtliche Verteilung der Messpunkte des Clusters auf, denn alle Messpunkte liegen ungefähr innerhalb eines länglichen rechteckigen Bereichs wie dem Bereich 37. Das Fehlen von Clusterpunkten in der Darstellung der Fig. 6 oberhalb der dargestellten Clusterpunkte weist darauf hin, dass es sich um eine lokal begrenzte erhebliche Soll-Form-Abweichung handelt.

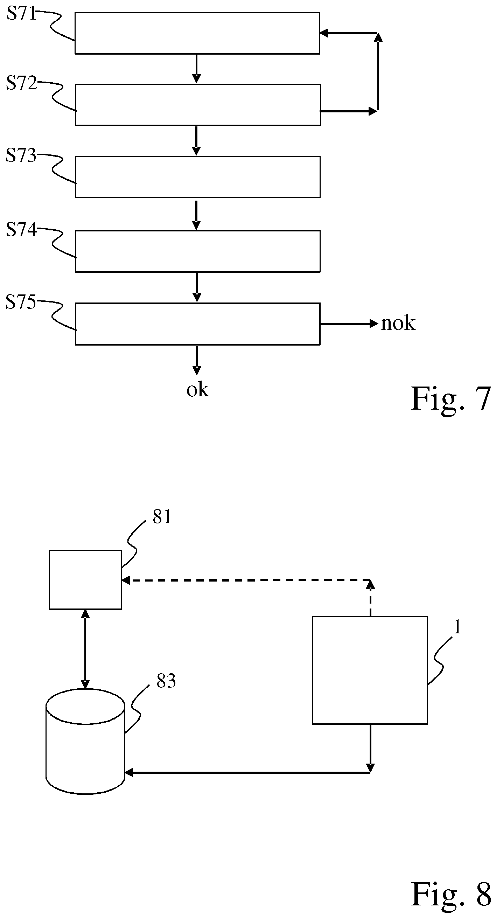

Eine Vorgehensweise bei der Vermessung einer Vielzahl von Werkstücken gleichen Typs entsprechend einer Messvorschrift wird nun anhand der Fig. 7 beschrieben. In einem ersten Schritt S71 wird ein erstes Werkstück aus einer Serienfertigung gemäß der Messvorschrift an einer Mehrzahl von Messpunkten mittels eines Koordinatenmessgeräts vermessen. Zum Beispiel sind vorab zwei oder mehr Cluster von Oberflächenpunkten identifiziert worden,

a) deren Messwerte jeweils paarweise miteinander korreliert sind oder
b) wobei die Messwerte eines ersten der Oberflächenpunkte mit den Messwerten aller anderen Oberflächenpunkte des Clusters korreliert sind

und insbesondere jeweils eine Korrelation höher als ein Schwellenwert aufweisen. Jedes Cluster weist einen ausgezeichneten Messpunkt auf, der wie bereits erwähnt als "Zentrum" des Clusters bezeichnet werden kann. Dieser zentrale Messpunkt ist im Fall b) der erste Oberflächenpunkt. Gemäß der Messvorschrift werden in diesem Fall zum Beispiel jeweils das Clusterzentrum und vier weitere Messpunkte des Clusters vermessen. Die Messwerte der vermessenden Messpunkte werden ausgegeben und in dem folgenden Schritt S72 in einem Datenspeicher gespeichert. Wie die zurück von Schritt S72 zu Schritt S71 führenden Pfeile andeuten, werden die Schritte für eine Vielzahl von Werkstücken wiederholt. Dabei wird jedes der Werkstücke gemäß der Messvorschrift an denselben Messpunkten vermessen, wobei sich dies auf ein gemeinsames Koordinatensystem aller Werkstücke bezieht, zum Beispiel ein Koordinatensystem, einer Bearbeitungsmaschine, mit der die Werkstücke nacheinander bearbeitet oder hergestellt werden, oder ein Koordinatensystem eines CAD-Modells der Werkstücke.

Nachdem eine ausreichende Anzahl von Werkstücken aus der Serienfertigung vermessen wurde, wobei zum Beispiel eine Anzahl von fünfzig oder siebzig Werkstücken als ausreichend vorgegeben ist, wird in dem auf die vorerst letzte Ausführung von Schritt S72 folgenden Schritt S73 jeweils in Bezug auf jeden der ausgezeichneten Punkte, zum Beispiel der Clusterzentren, paarweise zu allen weiteren Messpunkten, die dem jeweiligen ausgezeichneten Punkt zugeordnet sind, die Korrelation der Messwerte über alle vermessenen (z. B. fünfzig oder siebzig) Werkstücke ermittelt.

In dem folgenden Schritt S74 wird jede der berechneten Korrelationen daraufhin überprüft, ob sie den Erwartungen entspricht. Insbesondere kann in diesem Schritt für jede berechnete Korrelation ermittelt werden, ob der Korrelationswert bzw. das Maß der Korrelation mindestens gleich einem vorgegebenen Schwellenwert (von zum Beispiel 0,8 oder 0,9) ist. Wenn alle Korrelationen der Erwartung entsprechen, wird in Schritt S75 ein Signal "ok" ausgegeben, das anzeigt, dass die Erwartungen erfüllt sind. Zum Beispiel kann dieses Signal an einen Nutzer oder an einen Computer ausgegeben werden. Wenn dagegen zumindest eine der Korrelationen nicht der Erwartung entspricht, wird in Schritt S75 ein Signal "nok" ausgegeben, das anzeigt, dass die Erwartungen nicht erfüllt sind. Vorzugsweise wird außerdem mit dem Signal "nok" die Information ausgegeben, welche der Korrelationen nicht erfüllt ist, beispielsweise durch Angabe desjenigen weiteren Messpunkts, dessen Korrelation mit dem zugehörigen ausgezeichneten Messpunkt nicht die Erwartung erfüllt bzw. ihr nicht entspricht. Zum Beispiel kann diese weiteren Messpunkt in einer (zum Beispiel dreidimensionalen) grafischen Darstellung eines Modells des Werkstücks entsprechend markiert werden, zum Beispiel rot dargestellt werden. Diese Art der Nutzung des Signals "nok" und der zusätzlich ausgegebenen Details ist zur Information eines Nutzers geeignet. Sowohl das Signal "nok" als auch - wenn vorhanden - die zusätzlich ausgegebenen Details kann/können auch automatisch ausgewertet werden, zum Beispiel mittels eines Computers, der das Signal empfängt. Diese Computer kann zum Beispiel entscheiden, ob aufgrund einzelner Korrelationen, die die Erwartungen nicht erfüllen, die Serienfertigung unterbrochen werden sollte oder nicht. Für die Entscheidung können Entscheidungskriterien vorgegeben sein. Optional kann der Computer gegebenenfalls die Serienfertigung unterbrechen oder zumindest eine Empfehlung zur Unterbrechung ausgeben.

Insbesondere wenn die Erwartungen jedenfalls soweit erfüllt worden sind, dass die Serienfertigung fortgesetzt werden kann, kann erneut mit dem anhand von Fig. 7 beschriebenen Verfahren begonnen werden, wobei in der fortgesetzten Serienfertigung hergestellte oder bearbeiteter Werkstücke vermessen werden. Dabei werden vorzugsweise für jeden ausgezeichneten Messpunkt andere weitere Messpunkte vermessen, d. h. die weiteren Messpunkte liegen an anderen Oberflächenpositionen des Werkstücks als bei der vorangegangenen Durchführung des Verfahrens.

Anhand von Fig. 8 wird nun ein Ausführungsbeispiel für eine Anordnung mit zumindest einem Koordinatenmessgerät und einer Auswertungseinrichtung zur Auswertung von Messwerten beschrieben. Die Anordnung weist ein Koordinatenmessgerät 1 auf, bei dem es sich zum Beispiel um das Koordinatenmessgerät aus Fig. 1 handeln kann. Das Koordinatenmessgerät ist mit Datenspeicher 83 verbunden. Ferner weist die Anordnung eine Auswertungseinrichtung 81 auf, die mit dem Datenspeicher 83 verbunden ist. In konkreter Ausgestaltung kann die Auswertungseinrichtung 81 Teil der Steuerung des Koordinatenmessgeräts 1 sein und/oder durch eine zusätzliche Einrichtung wie zum Beispiel den in Fig. 1 dargestellten Computer 17 realisiert sein. Wenn die Auswertungseinrichtung 81 zumindest teilweise durch die Steuerung des Koordinatenmessgeräts 1 realisiert ist, kann der Datenspeicher 83 auch Daten speichern, die für den Betrieb des Koordinatenmessgeräts geeignet sind oder benötigt werden. Wenn die Auswertungseinrichtung ganz oder teilweise durch eine separate Einheit wie den Computer 17 realisiert ist, kann der Datenspeicher 83 Teil der separaten Einheit sein. Selbstverständlich sind andere Ausgestaltungen möglich, wie zum Beispiel ein verteilter Datenspeicher, zum Beispiel unter Nutzung des Internet als Datencloud. Wie durch gestrichelte Pfeile in Fig. 8 dargestellt ist, kann der Datenfluss, insbesondere die Übertragung von Messwerten, von dem Koordinatenmessgerät 1 zu dem Datenspeicher 83 über die Auswertungseinrichtung 81 stattfinden. In diesem Fall kann die direkte Verbindung des Koordinatenmessgeräts 1 zu dem Datenspeicher 83 entfallen.

Während des Betriebes der Anordnung vermisst das Koordinatenmessgerät 1 eine Vielzahl von Werkstücken gleichen Typs entsprechend einer Messvorschrift, wobei für jedes der Werkstücke ein ausgezeichneter Messpunkt und zumindest ein zusätzlicher Messpunkt vermessen werden, sodass als Ergebnis für jedes vermessene Werkstück ein Messwert für den ausgezeichneten Messpunkt und ein Messwert für jeden zusätzlichen Messpunkt erzeugt wird. Die Messwerte werden in dem Datenspeicher 83 gespeichert. Der Auswertungseinrichtung steht aus einer vorab durchgeführten Vermessung von anderen Werkstücken des gleichen Typs, bei der für die anderen Werkstücke jeweils derselbe ausgezeichnete Messpunkt und eine Vielzahl weiterer Oberflächenpunkte als weitere Messpunkte vermessen wurden, Information über eine bestehende Korrelation der Messwerte des ausgezeichneten Messpunkts zu den Messwerten der weiteren Messpunkte zur Verfügung. Beispielsweise ist diese Information ebenfalls in dem Datenspeicher 83 gespeichert. Der zusätzliche Messpunkt liegt in einem Oberflächenbereich, in dem gemäß der Information aus der vorab durchgeführten Vermessung eine Korrelation der Messwerte des ausgezeichneten Messpunkts zu den Messwerten des zusätzlichen Messpunkts zu erwarten ist. Die Auswertungseinrichtung 81 überprüft durch Auswertung der Messwerte des ausgezeichneten Messpunkts und der Messwerte des zusätzlichen Messpunkts oder der zusätzlichen Messpunkte, ob die Korrelation der Messwerte des ausgezeichneten Messpunkts zu den Messwerten des zusätzlichen Messpunkts oder der zusätzlichen Messpunkte vorhanden ist und/oder wie hoch die Korrelation ist, und gibt ein Prüfergebnis aus, zum Beispiel an einen Nutzer und/oder an die Steuerung des Koordinatenmessgeräts 1.

**Patentansprüche**

1. Verfahren zur Vermessung von Werkstücken (26; 36), wobei die Werkstücke (26; 36) gleichen Typs sind und wobei

   • für eine Vielzahl der Werkstücke (26; 36) des gleichen Typs entsprechend einer Messvorschrift jeweils an gleicher vorgegebener Position bezogen auf ein Koordinatensystem des Werkstücks ein Oberflächenpunkt des Werkstücks (26; 36) als ein durch die Messvorschrift ausgezeichneter Messpunkt (27, 28; 38) vermessen wird und als Ergebnis für jedes vermessene Werkstück ein Messwert erhalten wird,

• aus einer vorab durchgeführten Vermessung von anderen Werkstücken (26; 36) des gleichen Typs, bei der für die anderen Werkstücke (26; 36) jeweils derselbe ausgezeichnete Messpunkt (27, 28; 38) und eine Vielzahl weiterer Oberflächenpunkte als weitere Messpunkte vermessen wurden, eine Information über eine bestehende Korrelation der Messwerte des ausgezeichneten Messpunkts (27, 28; 38) zu den Messwerten der weiteren Messpunkte zur Verfügung steht,

**dadurch gekennzeichnet, dass**

• bei der Vermessung der Vielzahl der Werkstücke (26; 36) des gleichen Typs entsprechend der Messvorschrift zusätzlich zu dem ausgezeichneten Messpunkt (27, 28; 38) bei jedem der Vielzahl der Werkstücke (26; 36) auch zumindest ein Oberflächenpunkt als zusätzlicher Messpunkt (29, 30) vermessen wird, sodass als Ergebnis für jedes vermessene Werkstück ein Messwert für den ausgezeichneten Messpunkt und ein Messwert für jeden zusätzlichen Messpunkt erhalten wird,
• der zusätzliche Messpunkt in einem Oberflächenbereich liegt, in dem gemäß der Information aus der vorab durchgeführten Vermessung eine Korrelation der Messwerte des ausgezeichneten Messpunkts (27, 28; 38) zu den Messwerten des zusätzlichen Messpunkts (29, 30) zu erwarten ist, und
• durch Auswertung der Messwerte des ausgezeichneten Messpunkts und der Messwerte des zusätzlichen Messpunkts (29, 30) oder der zusätzlichen Messpunkte überprüft wird, ob die Korrelation der Messwerte des ausgezeichneten Messpunkts (27, 28; 38) zu den Messwerten des zusätzlichen Messpunkts (29, 30) oder der zusätzlichen Messpunkte vorhanden ist und/oder wie hoch die Korrelation ist, und ein Prüfergebnis ausgegeben wird.

2. Verfahren nach Anspruch 1, wobei bei einer Auswahl des zusätzlichen Messpunkts (29, 30) oder eines der zusätzlichen Messpunkte ein vorgegebener Mindestabstand zu dem ausgezeichneten Messpunkt (27, 28; 38) eingehalten wird.

3. Verfahren nach Anspruch 1 oder 2, wobei der zusätzliche Messpunkt (29, 30) oder zumindest einer der zusätzlichen Messpunkte so gewählt wird, dass er in einem Randbereich des Oberflächenbereichs liegt, in dem gemäß der Information aus der vorab durchgeführten Vermessung eine Korrelation der Messwerte des ausgezeichneten Messpunkts (27, 28; 38) zu den Messwerten des zusätzlichen Messpunkts (29, 30) zu erwarten ist.

4. Verfahren nach einem der Ansprüche 1 bis 3, wobei die Vermessung der Vielzahl der Werkstücke (26; 36) des gleichen Typs eine Vermessung einer ersten Vielzahl der Werkstücke (26; 36) des gleichen Typs ist, wobei eine zweite Vielzahl der Werkstücke (26; 36) des gleichen Typs vermessen wird, wobei bei jedem der zweiten Vielzahl der Werkstücke (26; 36) auch zumindest ein anderer zusätzlicher Messpunkt (29, 30) vermessen wird, der in dem Oberflächenbereich, in dem gemäß der Information aus der vorab durchgeführten Vermessung eine Korrelation der Messwerte des ausgezeichneten Messpunkts (27, 28; 38) zu den Messwerten des zusätzlichen Messpunkts (29, 30) zu erwarten ist, an anderer Position als der zusätzliche Messpunkt (29, 30) oder als alle zusätzlichen Messpunkte bei der Vermessung der ersten Vielzahl der Werkstücke (26; 36) des gleichen Typs liegt, und wobei durch Auswertung der Messwerte des ausgezeichneten Messpunkts (27, 28; 38) und des zumindest einen anderen zusätzlichen Messpunkts (29, 30) überprüft wird, ob die Korrelation der Messwerte des ausgezeichneten Messpunkts (27, 28; 38) zu den Messwerten des zusätzlichen Messpunkts (29, 30) oder der zusätzlichen Messpunkte vorhanden ist und/oder wie hoch die Korrelation ist, und ein Prüfergebnis ausgegeben wird.

5. Verfahren nach einem der Ansprüche 1 bis 4, wobei der Oberflächenbereich, in dem gemäß der Information aus der vorab durchgeführten Vermessung eine Korrelation der Messwerte des ausgezeichneten Messpunkts (27, 28; 38) zu den Messwerten des zusätzlichen Messpunkts (29, 30) zu erwarten ist, in eine Mehrzahl von Teil-Oberflächenbereichen zerlegt wird, wobei in den Teil-Oberflächenbereichen eine höhere Korrelation der Messwerte der Oberflächenpunkte als in dem nicht zerlegten Oberflächenbereich zu erwarten ist, wobei für jeden der Teil-Oberflächenbereiche und bei jedem der Vielzahl der Werkstücke (26; 36) ein ausgezeichneter Messpunkt (27, 28; 38) und zumindest ein zusätzlicher Messpunkt (29, 30) vermessen werden und wobei in Bezug auf jeden der Teil-Oberflächenbereiche durch Auswertung der Messwerte des ausgezeichneten Messpunkts (27, 28; 38) und der Messwerte des zusätzlichen Messpunkts (29, 30) oder der zusätzlichen Messpunkte überprüft wird, ob die Korrelation der Messwerte des ausgezeichneten Messpunkts (27, 28; 38) zu den Messwerten des zusätzlichen Messpunkts (29, 30) oder der zusätzlichen Messpunkte vorhanden ist und/oder wie hoch die Korrelation ist, und ein Prüfergebnis ausgegeben wird.

6. Anordnung mit zumindest einem Koordinatenmessgerät (1) und einer Auswertungseinrichtung (81) zur Auswertung von Messwerten, die von dem zumindest einen Koordinatenmessgerät erzeugt werden, wobei die Auswertungseinrichtung (81) ausgestaltet ist, Messwerte aus einer Vermessung von Werkstücken (26; 36) auszuwerten, die gleichen Typs sind, insbesondere Anordnung zur Durchführung des Verfahrens nach einem der vorhergehenden Ansprüche, wobei

• das zumindest eine Koordinatenmessgerät (1) ausgestaltet ist, für eine Vielzahl der Werkstücke (26; 36) des gleichen Typs entsprechend einer Messvorschrift jeweils an gleicher vorgegebener Position bezogen auf ein Koordinatensystem des Werkstücks (26; 36) einen Oberflächenpunkt des Werkstücks als einen durch die Messvorschrift ausgezeichneten Messpunkt (27, 28; 38) zu vermessen und als Ergebnis für jedes vermessene Werkstück einen Messwert zu erzeugen,

• die Auswertungseinrichtung (81) ausgestaltet ist, aus einer vorab durchgeführten Vermessung von anderen Werkstücken (26; 36) des gleichen Typs, bei der für die anderen Werkstücke (26; 36) jeweils derselbe ausgezeichnete Messpunkt (27, 28; 38) und eine Vielzahl weiterer Oberflächenpunkte als weitere Messpunkte vermessen wurden, eine Information über eine bestehende Korrelation der Messwerte des ausgezeichneten Messpunkts (27, 28; 38) zu den Messwerten der weiteren Messpunkte zu erhalten und zu verwenden,

**dadurch gekennzeichnet, dass**

• das zumindest eine Koordinatenmessgerät (1) ausgestaltet ist, bei der Vermessung der Vielzahl der Werkstücke (26; 36) des gleichen Typs entsprechend der Messvorschrift zusätzlich zu dem ausgezeichneten Messpunkt (27, 28; 38) bei jedem der Vielzahl der Werkstücke (26; 36) auch zumindest einen Oberflächenpunkt als zusätzlichen Messpunkt (29, 30) zu vermessen, sodass als Ergebnis für jedes vermessene Werkstück ein Messwert für den ausgezeichneten Messpunkt (27, 28; 38) und ein Messwert für jeden zusätzlichen Messpunkt erzeugt wird,

• der zusätzliche Messpunkt (29, 30) in einem Oberflächenbereich liegt, in dem gemäß der Information aus der vorab durchgeführten Vermessung eine Korrelation der Messwerte des ausgezeichneten Messpunkts (27, 28; 38) zu den Messwerten des zusätzlichen Messpunkts (29, 30) zu erwarten ist, und

• die Auswertungseinrichtung (81) ausgestaltet ist, durch Auswertung der Messwerte des ausgezeichneten Messpunkts (27, 28; 38) und der Messwerte des zusätzlichen Messpunkts (29, 30) oder der zusätzlichen Messpunkte zu überprüfen, ob die Korrelation der Messwerte des ausgezeichneten Messpunkts (27, 28; 38) zu den Messwerten des zusätzlichen Messpunkts (29, 30) oder der zusätzlichen Messpunkte vorhanden ist und/oder wie hoch die Korrelation ist, und ein Prüfergebnis auszugeben.

**Claims**

1. Method for measuring workpieces (26; 36), wherein the workpieces (26; 36) are of the same type and wherein,

• for a multiplicity of the workpieces (26; 36) of the same type, in accordance with a measurement specification, a surface point of the workpiece (26; 36) is measured as a measurement point (27, 28; 38) designated by the measurement specification in each case at the same specified position with respect to a coordinate system of the workpiece and a measurement value is obtained as a result for each measured workpiece,

• from a previously performed measurement of other workpieces (26; 36) of the same type, in which in each case the same designated measurement point (27, 28; 38) and a multiplicity of further surface points were measured as further measurement points for the other workpieces (26; 36), a piece of information relating to an existing correlation between the measurement values of the designated measurement point (27, 28; 38) and the measurement values of the further measurement points is available,

**characterized in that**,

• in addition to the designated measurement point (27, 28; 38), also at least one surface point is measured as an additional measurement point (29, 30) in accordance with the measurement specification during the measurement of the multiplicity of the workpieces (26; 36) of the same type for each of the multiplicity of the workpieces (26; 36), so that one measurement value for the designated measurement point and one measurement value for each additional measurement point is obtained as a result for each measured workpiece,

• the additional measurement point lies in a surface region in which, in accordance with the piece of information from the previously performed measurement, a correlation between the measurement values of the designated measurement point (27, 28; 38) and the measurement values of the additional measurement point (29, 30) is expected, and

• a check is carried out by evaluating the measurement values of the designated measurement point and the measurement values of the additional measurement point (29, 30) or the additional measurement points as to whether there is a correlation between the measurement values of the designated measurement point (27, 28; 38) and the measurement values of the additional measurement point (29, 30) or of the additional measurement points and/or how high the correlation is, and a result of the check is output.

2. Method according to Claim 1, wherein, during a selection of the additional measurement point (29, 30) or of one of the additional measurement points, a specified minimum distance from the designated measurement point (27, 28; 38) is observed.

3. Method according to Claim 1 or 2, wherein the additional measurement point (29, 30) or at least one of the additional measurement points is selected such that it lies in a peripheral region of the surface region in which, in accordance with the piece of information from the previously performed measurement, a correlation between the measurement values of the designated measurement point (27, 28; 38) and the measurement values of the additional measurement point (29, 30) is expected.

4. Method according to one of Claims 1 to 3, wherein the measurement of the multiplicity of the workpieces (26; 36) of the same type is a measurement of a first multiplicity of the workpieces (26; 36) of the same type, wherein a second multiplicity of the workpieces (26; 36) of the same type is measured, wherein, for each of the second multiplicity of the workpieces (26; 36), also at least one other additional measurement point (29, 30) is measured, which lies, in the surface region in which, in accordance with the piece of information from the previously performed measurement, a correlation between the measurement values of the designated measurement point (27, 28; 38) and the measurement values of the additional measurement point (29, 30) is expected, at a different position than the additional measurement point (29, 30) or than all the additional measurement points during the measurement of the first multiplicity of the workpieces (26; 36) of the same type, and wherein a check is performed by evaluating the measurement values of the designated measurement point (27, 28; 38) and of the at least one other additional measurement point (29, 30) as to whether there is a correlation between the measurement values of the designated measurement point (27, 28; 38) and the measurement values of the additional measurement point (29, 30) or of the additional measurement points and/or how high the correlation is, and a result of the check is output.

5. Method according to one of Claims 1 to 4, wherein the surface region in which, in accordance with the piece of information from the previously performed measurement, a correlation between the measurement values of the designated measurement point (27, 28; 38) and the measurement values of the additional measurement point (29, 30) is expected, is decomposed into a plurality of partial surface regions, wherein a higher correlation of the measurement values of the surface points is expected in the partial surface regions than in the non-decomposed surface region, wherein one designated measurement point (27, 28; 38) and at least one additional measurement point (29, 30) are measured for each of the partial surface regions and for each of the multiplicity of the workpieces (26; 36), and wherein, with respect to each of the partial surface regions, a check is performed by evaluating the measurement values of the designated measurement point (27, 28; 38) and the measurement values of the additional measurement point (29, 30) or of the additional measurement points as to whether there is a correlation between the measurement values of the designated measurement point (27, 28; 38) and the measurement values of the additional measurement point (29, 30) or of the additional measurement points and/or how high the correlation is, and a result of the check is output.

6. Arrangement with at least a coordinate measuring machine (1) and an evaluation device (81) for evaluating measurement values which are generated by the at least one coordinate measuring machine, wherein the evaluation device (81) is configured to evaluate measurement values from a measurement of workpieces (26; 36), which are of the same type, in particular arrangement for carrying out the method according to one of the preceding claims, wherein

- the at least one coordinate measuring machine (1) is configured to measure, for a multiplicity of the workpieces (26; 36) of the same type, in accordance with a measurement specification, a surface point of the workpiece as a measurement point (27, 28; 38) designated by the measurement specification in each case at the same specified position with respect to a coordinate system of the workpiece (26; 36) and to generate a measurement value as a result for each measured workpiece,
- the evaluation device (81) is configured to obtain from a previously performed measurement of other workpieces (26; 36) of the same type, in which in each case the same designated measurement point (27, 28; 38) and a multiplicity of further surface points were measured as further measurement points for the other workpieces (26; 36), a piece of information relating to an existing correlation between the measurement values of the designated measurement point (27, 28; 38) and the measurement values of the further measurement points and to use it,

**characterized in that**

• the at least one coordinate measuring machine (1) is configured to measure, in addition to the designated measurement point (27, 28; 38), also at least one surface point as an additional measurement point (29, 30) in accordance with the measurement specification during the measurement of the multiplicity of the workpieces (26; 36) of the same type for each of the multiplicity of the workpieces (26; 36), so that one measurement value for the designated measurement point (27, 28; 38) and one measurement value for each additional measurement point is generated as a result for each measured workpiece,
• the additional measurement point (29, 30) lies in a surface region in which, in accordance with the piece of information from the previously performed measurement, a correlation between the measurement values of the designated measurement point (27, 28; 38) and the measurement values of the additional measurement point (29, 30) is expected, and
• the evaluation device (81) is configured to check by evaluating the measurement values of the designated measurement point (27, 28; 38) and the measurement values of the additional measurement point (29, 30) or the additional measurement points whether there is a correlation between the measurement values of the designated measurement point (27, 28; 38) and the measurement values of the additional measurement point (29, 30) or of the additional measurement points and/or how high the correlation is, and to output a result of the check.

**Revendications**

1. Procédé de mesurage de pièces (26 ; 36), les pièces (26 ; 36) étant du même type, et dans lequel

• pour une pluralité des pièces (26 ; 36) du même type, selon une consigne de mesure, respectivement dans une même position prédéfinie en référence à un système de coordonnées de la pièce, un point de surface de la pièce (26 ; 36) est mesuré comme un point de mesure (27, 28 ; 38) désigné par la consigne de mesure, et une valeur de mesure est obtenue comme résultat pour chaque pièce mesurée,
• selon un mesurage effectué préalablement sur d'autres pièces (26 ; 36) du même type, dans lequel pour les autres pièces (26 ; 36) respectivement le même point de mesure désigné (27, 28 ; 38) et une pluralité d'autres points de surface ont été mesurés comme d'autres points de mesure, une information concernant une corrélation existante entre les valeurs de mesure du point de mesure désigné (27, 28 ; 38) et les valeurs de mesure des autres points de mesure est disponible, **caractérisé en ce que**
• lors du mesurage de la pluralité des pièces (26 ; 36) du même type, selon la consigne de mesure, en plus du point de mesure désigné (27, 28 ; 38), sur chacune de la pluralité des pièces (26 ; 36) au moins un point de surface est également mesuré comme point de mesure supplémentaire (29, 30) de sorte que comme résultat pour chaque pièce mesurée, une valeur de mesure pour le point de mesure désigné et une valeur de mesure pour chaque point de mesure supplémentaire est obtenue,
• le point de mesure supplémentaire est situé dans une zone de surface dans laquelle, selon l'information issue du mesurage effectué préalablement, il faut s'attendre à une corrélation entre les valeurs de mesure du point de mesure désigné (27, 28 ; 38) et les valeurs de mesure du point de mesure supplémentaire (29, 30), et
• par l'évaluation des valeurs de mesure du point de mesure désigné et des valeurs de mesure du point de mesure supplémentaire (29, 30) ou des points de mesure supplémentaires, il est vérifié si la corrélation existe entre les valeurs de mesure du point de mesure désigné (27, 28 ; 38) ou les valeurs de mesure du point de mesure supplémentaire (29, 30) ou les points de mesure supplémentaires, et/ou quel est le degré de corrélation, et un résultat de vérification est sorti.

2. Procédé selon la revendication 1, dans lequel lors d'une sélection du point de mesure supplémentaire (29, 30) ou d'un des points de mesure supplémentaires, un espacement minimal prédéfini par rapport au point de mesure désigné (27, 28 ; 38) est respecté.

3. Procédé selon la revendication 1 ou 2, dans lequel le point de mesure supplémentaire (29, 30), ou du moins l'un des points de mesure supplémentaires, est sélectionné de telle sorte qu'il est situé dans une zone marginale de la zone de surface dans laquelle, selon l'information issue du mesurage effectué préalablement, il faut s'attendre à une corrélation entre les valeurs de mesure du point de mesure désigné (27, 28 ; 38) et les valeurs de mesure du point de mesure supplémentaire (29, 30).

4. Procédé selon l'une quelconque des revendications 1 à 3, dans lequel le mesurage de la pluralité des pièces (26 ; 36) du même type est un mesurage d'une première pluralité des pièces (26 ; 36) du même type, une deuxième pluralité des pièces (26 ; 36) du même type étant mesurée, dans lequel, sur chacune de la deuxième pluralité des pièces (26 ; 36), au moins un autre point de mesure supplémentaire (29, 30) est également mesuré qui est situé dans la zone de surface dans laquelle, selon l'information issue du mesurage effectué préalablement, il faut s'attendre à une corrélation entre les valeurs de mesure du point de mesure désigné (27, 28 ; 38) et les valeurs de mesure du point de mesure supplémentaire (29, 30), à une position différente du point de mesure supplémentaire (29, 30) ou de tous les points de mesure supplémentaires lors du mesurage de la première pluralité des pièces (26 ; 36), et dans lequel, par l'évaluation des valeurs de mesure du point de mesure désigné (27, 28 ; 38) et du au moins un autre point de mesure supplémentaire (29, 30), il est vérifié si la corrélation existe entre les valeurs de mesure du point de mesure désigné (27, 28 ; 38) et les valeurs de mesure du point de mesure supplémentaire (29, 30) ou les points de mesure supplémentaires, et/ou quel est le degré de corrélation, et un résultat de vérification est sorti.

5. Procédé selon l'une quelconque des revendications 1 à 4, dans lequel la zone de surface dans laquelle, selon l'information issue du mesurage effectué préalablement, il faut s'attendre à une corrélation entre les valeurs de mesure du point de mesure désigné (27, 28 ; 38) et les valeurs de mesure du point de mesure supplémentaire (29, 30), est décomposée en une pluralité de zones de surface partielles, dans lequel, dans les zones de surface partielles, il faut s'attendre à une plus grande corrélation des valeurs de mesure des points de surface que dans la zone de surface non décomposée, dans lequel pour chacune des zones de surface partielles et sur chacune de la pluralité des pièces (26 ; 36), un point de mesure désigné (27, 28 ; 38) et au moins un point de mesure supplémentaire (29, 30) sont mesurés, et dans lequel, par rapport à chacune des zones de surface partielles, par l'évaluation des valeurs de mesure du point de mesure désigné (27, 28 ; 38) et des valeurs de mesure du point de mesure supplémentaire (29, 30) ou des points de mesure supplémentaires, il est vérifié si la corrélation existe entre les valeurs de mesure du point de mesure désigné (27, 28 ; 38) et les valeurs de mesure du point de mesure supplémentaire (29, 30) ou les points de mesure supplémentaires, et/ou quel est le degré de corrélation, et un résultat de vérification est sorti.

6. Agencement comprenant au moins un appareil de mesure de coordonnées (1) et un dispositif d'évaluation (81) servant à évaluer des valeurs de mesure qui sont générées par ledit au moins un appareil de mesure de coordonnées, le dispositif d'évaluation (81) étant configuré pour évaluer des valeurs de mesure issues d'un mesurage de pièces (26 ; 36) du même type, en particulier agencement permettant d'exécuter le procédé selon l'une quelconque des revendications précédentes, dans lequel

• ledit au moins un appareil de mesure de coordonnées (1) est configuré pour mesurer pour une pluralité des pièces (26 ; 36) du même type, selon une consigne de mesure, respectivement dans une même position prédéfinie en référence à un système de coordonnées de la pièce (26 ; 36), un point de surface de la pièce comme un point de mesure désigné (27, 28 ; 38) par la consigne de mesure, et pour générer comme résultat une valeur mesurée pour chaque pièce mesurée,
• le dispositif d'évaluation (81) est configuré pour obtenir et utiliser à partir d'un mesurage effectué préalablement d'autres pièces (26 ; 36) du même type, dans lequel pour les autres pièces (26 ; 36) respectivement le même point de mesure désigné (27, 28 ; 38) et une pluralité d'autres points de surface ont été mesurés comme d'autres points de mesure, une information concernant une corrélation existante entre les valeurs de mesure du point de mesure désigné (27, 28 ; 38) et les valeurs de mesure des autres points de mesure,

**caractérisé en ce que**

• ledit au moins un appareil de mesure de coordonnées (1) est configuré pour mesurer lors du mesurage de la pluralité des pièces (26 ; 36) du même type selon la consigne de mesure, en plus du point de mesure désigné (27, 28 ; 38), sur chacune de la pluralité des pièces (26 ; 36), également au moins un point de surface comme point de mesure supplémentaire (29, 30) de sorte que comme résultat pour chaque pièce mesurée, une valeur de mesure pour le point de mesure désigné (27, 28 ; 38) et une valeur de mesure pour chaque point de mesure supplémentaire sont générées,
• le point de mesure supplémentaire (29, 30) est situé dans une zone de surface dans laquelle, selon l'information issue du mesurage effectué préalablement, il faut s'attendre à une corrélation entre les valeurs de mesure du point de mesure désigné (27, 28 ; 38) et les valeurs de mesure du point de mesure supplémentaire (29, 30), et
• le dispositif d'évaluation (81) est configuré pour vérifier par l'évaluation des valeurs de mesure du point de mesure désigné (27, 28 ; 38) et des valeurs de mesure du point de mesure supplémentaire (29, 30) ou des points de mesure supplémentaires si la corrélation existe entre les valeurs de mesure du point de mesure désigné (27, 28 ; 38) et les valeurs de mesure du point de mesure supplémentaire (29, 30) ou les points de mesure supplémentaires, et/ou quel est le degré de corrélation, et pour sortir un résultat de vérification.

Fig. 1

Fig. 2

26

Fig. 3

26

Fig. 4

36

37

Fig. 5

Fig. 6

Fig. 7

Fig. 8

S1

S2

S3

S4

S5

Fig. 9

S11

S12

S13

S14

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180307198 A1
- US 2011054835 A1
- EP 3708945 A